# EUROPEAN PATENT APPLICATION

(11) **EP 3 340 146 A1**
(43) Date of publication of application: **27.06.2018**
(21) Application number: 17161145.2
(22) Date of filing: 15.03.2017
(51) Int. Cl.: G06Q 20/32, G06Q 20/38

(54) **PROVIDING DEVICE AND SYSTEM AGNOSTIC ELECTRONIC PAYMENT TOKENS BACKGROUND**

(30) Priority: 21.12.2016 US 201615387304; 22.12.2016 WO PCT/US2016/068336
(71) Applicant: Facebook, Inc., Menlo Park, CA 94025 (US)
(72) Inventor: SUBBARAYAN, Anand, Menlo Park, CA California 94025 (US); PARASURAM, Yegnashankar, Menlo Park, CA California 94025 (US); SONG, Shuo, Menlo Park, CA California 94025 (US); MITTAL, Akshay, Menlo Park, CA California 94025 (US); LIU, Xishuo, Menlo Park, CA California 94025 (US); HURLEY, Kevin Patrick, Menlo Park, CA California 94025 (US); PERELMAN, Vladislav, Menlo Park, CA California 94025 (US); INCZE, Attila, Menlo Park, CA California 94025 (US); SHAH, Shaheen, Menlo Park, CA California 94025 (US)
(74) Representative: Schröer, Gernot H.

(57) **Abstract**

The present disclosure relates to systems, methods, and devices for device and system agnostic payment tokenization for processing payment transactions. In particular, the message system allows a user to initiate a payment transaction with a merchant. For example, one or more implementations involve identifying, in response to a request by a user client-device, a payment authorization number associated with a user account and sending a request for a payment token to a payment network associated with the payment authorization number. One or more embodiments receive a payment token representing the payment authorization number. Additionally, one or more embodiments encrypt the payment token and send the encrypted payment token to the user client-device to provide to a merchant system associated with the merchant.

## Description

### BACKGROUND AND RELEVANT ART

Electronic payment systems allow users to perform payment transactions with others via software applications on one or more types of devices (e.g., desktop devices and mobile devices). Some electronic payment systems allow users to perform payment transactions with financial institutions or merchants (i.e., peer-to-business payment transactions). For example, some electronic payment systems allow users to enter into payment transactions for goods or services with a merchant by way of an electronic payment application or a web browser on a computing device.

Some conventional electronic payment systems provide secure payment transactions by implementing tokenization of payment credentials to prevent sensitive information from being exposed to other parties. For example, some conventional systems integrate with a payment gateway system (such as BrainTree) to obtain gateway payment tokens for processing payment transactions via the specific gateway system. Payment tokens allow users to initiate payment transactions with merchants without allowing merchants or others to obtain and view the payment credentials (e.g., a credit card number). Although the gateway payment tokens provide a layer of security between the users and the merchants, users are still required to provide payment credentials to the gateway system. In particular, traditional electronic payment systems that use gateway tokenization store payment credentials at the payment gateways in association with users' payment credentials. By storing payment credentials of users at gateway systems, conventional electronic payment systems introduce security risks by increasing the number of locations and entities that have the payment credentials. In particular, merchants choose a payment gateway system and consumers are typically forced to use the merchant's chosen payment gateway if they want to make an electronic purchase from the merchant. Because the gateway payment token is limited to a specific gateway system, the tokens are not valid for use with other payment gateways. Thus, consumers that shop at multiple different merchants may end up having their payment credentials stored by multiple different payment gateways or even multiple times by the same payment gateway.

Furthermore, gateway payment tokens, are typically only valid with for a specific merchant using and a specific payment gateway combination. As such, the merchant sets up the relationship with the payment gateway and controls when gateway payments tokens are used (merchants typically do so to avoid storing credit card information and dealing with PCI compliance rules). Thus, individual consumers do not have the ability to set up and use conventional gateway payment tokens as a way of minimizing the exposure of their credit card information to merchants.

Consumer-friendly payment gateways (such as PayPal and Amazon Payments), unlike conventional payment gateways, provide individual consumers the option to make payments without providing a merchant with credit card information via the use of a payment token. For example, such consumer-friendly payment gateways often allow the merchant to include a payment option on their website or in their native application that allows the consumer to pay using an account with the consumer-friendly payment gateway rather than providing credit card information to the merchant. Unfortunately, in order for merchants to provide such an option, the merchant must integrate with the consumer-friendly payment gateway. In other words, the merchant must use the consumer-friendly payment gateway as their payment gateway or integrate with a conventional payment gateway in addition to integrating with the consumer-friendly payment gateway. It can be a hassle for merchants to integrate with multiple payment gateways and deal with differing rates, contracts, APIs, and receipt of payment methods. Indeed, many smaller and less sophisticated merchants simply to not have expertise or resources to integrate with multiple payment gateways. As such, the number of merchants that integrate with consumer-friendly payment gateways is limited. As such, individual consumers may not have the option of using their account with a consumer-friendly payment gateway to make secure payments with many merchants.

Mobile payments (such as Apple Pay) is another payment method that uses payment tokens. Mobile payments allow an individual consumer to choose whether or not they perform a secure transaction using mobile payments. Unfortunately, mobile payments also suffer from a number of drawbacks. First, mobile payments are mobile device and operating system specific. As such, a consumer has very little flexibility. If a user does not have a compatible device, they cannot perform a mobile payment. Furthermore, mobile payments work only with a point of sale device and are not valid for use with websites or native applications. Thus, even when using a compatible device, a consumer cannot use a mobile payment token to complete a transaction via a native application or web browser.

In summary, many conventional systems use tokenization, encryption, or merchant integration that enable secure electronic payment transactions. Such conventional systems, however, limit consumers and merchants. Accordingly, there are a number of disadvantages with conventional electronic payment systems and methods.

### SUMMARY

One or more embodiments described herein provide benefits and/or solve one or more of the foregoing or other problems in the art with systems and methods enable device and system agnostic electronic payment transactions that do not require merchants to integrate with a payment system. For example, the systems and methods allow a user client-device to request a token from a payment system to initiate a payment transaction with a merchant. The payment system obtains a payment token and sends payment token to the user client-device to pass on to the merchant. The systems and methods generate and pass the payment token in a manner that allows for any client device or operating system. Once the merchant receives the payment token, the merchant then initiates the payment transaction using the payment token as they would process a normal credit card transaction. As such, the merchant does not need to integrate with the payment system. By providing the token to the user client-device to pass to the merchant, the systems and methods provide a payment transaction process without direct communication between the payment system and the merchant, thereby increasing security.

Embodiments according to the invention are in particular disclosed in the attached claims directed to a method, a storage medium, a system and a computer program product, wherein any feature mentioned in one claim category, e.g. method, can be claimed in another claim category, e.g. system, as well. The dependencies or references back in the attached claims are chosen for formal reasons only. However any subject matter resulting from a deliberate reference back to any previous claims (in particular multiple dependencies) can be claimed as well, so that any combination of claims and the features thereof is disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

In an embodiment according to the invention a method comprises: receiving, by one or more servers and from a user client-device associated with a user, a request to initiate a payment transaction between the user and a merchant; identifying, by the one or more servers, a payment authorization number associated with a user account for the user; obtaining, by the one or more servers, a payment token representing the payment authorization number corresponding to the payment transaction; encrypting, by the one or more servers, the payment token representing the payment authorization number; and sending, by the one or more servers to the user client-device, the encrypted payment token for the user client-device to provide to a merchant system associated with the merchant in connection with the payment transaction.

Receiving the request to initiate the payment transaction between the user and the merchant may comprise receiving, from the user client-device, a JavaScript request via an application interface associated with the merchant.

In an embodiment according to the invention a method may comprise: identifying user information associated with the payment authorization number; and sending, to the user client-device, the user information with the encrypted payment token.

In an embodiment according to the invention a method may comprise: generating a payment message comprising the encrypted payment token and the user information; and sending the payment message for autocompleting a payment form associated with the merchant.

Encrypting the payment token may comprise encrypting the payment token to initiate the payment transaction between the user and the merchant irrespective of an operating system of the user client-device.

Encrypting the payment token may comprise encrypting the payment token with a key associated with the user client-device for decrypting the payment token at the user client-device.

In an embodiment according to the invention a method may comprise signing the payment token with a private key associated with the one or more servers for the user client-device.

Obtaining the payment token representing the payment authorization number may comprise: identifying the payment authorization number in connection with a payment credential of the user; sending, to a card network system associated with the payment credential of the user, a request message for the payment token representing the payment authorization number; and receiving, from the card network system, the payment token representing the payment authorization number.

Encrypting the payment token may comprise encrypting the payment token according to a format of the payment authorization number.

Identifying the payment authorization number associated with the user account for the user may comprise receiving an obfuscated user identifier from the user client-device and using the obfuscated user identifier to retrieve the payment authorization number. The user account may be a social networking account.

In an embodiment according to the invention a system comprises: at least one processor; and a non-transitory computer readable storage medium comprising instructions that, when executed by the at least one processor, cause the system to: receive, from a user client-device associated with a user, a request to initiate a payment transaction between the user and a merchant; identify a payment authorization number associated with a user account for the user; obtain a payment token representing the payment authorization number corresponding to the payment transaction; encrypt the payment token representing the payment authorization number; and send, to the user client-device, the encrypted payment token for the user client-device to provide to a merchant system associated with the merchant in connection with the payment transaction.

In an embodiment according to the invention a system may comprise instructions that, when executed by the at least one processor, cause the system to receive the request to initiate the payment transaction between the user and the merchant by receiving, from the user client-device, a JavaScript request via an application associated with the merchant.

In an embodiment according to the invention a system may comprise instructions that, when executed by the at least one processor, cause the system to: identify user information associated with the payment authorization number; and send, to the user client-device, the user information with the encrypted payment token.

In an embodiment according to the invention a system may comprise instructions that, when executed by the at least one processor, cause the system to encrypt the payment token by encrypting the payment token to initiate the payment transaction between the user and the merchant irrespective of an operating system of the user client-device.

In an embodiment according to the invention a system may comprise instructions that, when executed by the at least one processor, cause the system to: obtain a single-use cryptogram corresponding to the payment transaction; encrypt the single-use cryptogram corresponding to the payment transaction; and send, to the user client-device, the encrypted single-use cryptogram with the encrypted payment token.

In an embodiment according to the invention a system may comprise instructions that, when executed by the at least one processor, cause the system to encrypt the payment token with a key associated with the user client-device for decrypting the payment token at the user client-device.

In an embodiment according to the invention a system may comprise instructions that, when executed by the at least one processor, cause the system to encrypt the payment token according to a format of the payment authorization number.

In an embodiment according to the invention a non-transitory computer readable storage medium comprises instructions that, when executed by at least one processor, cause a computer system to: receive, from a user client-device associated with a user, a request to initiate a payment transaction between the user and a merchant; identify a payment authorization number associated with a user account for the user; obtain a payment token representing the payment authorization number corresponding to the payment transaction; encrypt the payment token representing the payment authorization number; and send, to the user client-device, the encrypted payment token for the user client-device to provide to a merchant system associated with the merchant in connection with the payment transaction.

In an embodiment according to the invention a non-transitory computer readable storage medium may comprise instructions that, when executed by the at least one processor, cause the computer system to: receive the request to initiate a payment transaction between the user and the merchant by receiving, from the user client-device, a JavaScript request via an application associated with the merchant; identify user information associated with the payment authorization number; and send, to the user client-device, the user information with the encrypted payment token for autocompleting a payment form in the application associated with the merchant.

In a further embodiment according to the invention, one or more computer-readable non-transitory storage media embody software that is operable when executed to perform a method according to the invention or any of the above mentioned embodiments.

In a further embodiment according to the invention, a system comprises: one or more processors; and at least one memory coupled to the processors and comprising instructions executable by the processors, the processors operable when executing the instructions to perform a method according to the invention or any of the above mentioned embodiments.

Additional features and advantages of the embodiments will be set forth in the description that follows, and in part will be obvious from the description, or can be learned by the practice of such exemplary embodiments. The features and advantages of such embodiments can be realized and obtained by means of the instruments and combinations particularly pointed out in the appended claims. These and other features will become more fully apparent from the following description and appended claims, or can be learned by the practice of such exemplary embodiments as set forth hereinafter.

### BRIEF DESCRIPTION OF THE DRAWINGS

Various embodiments will be described and explained with additional specificity and detail through the use of the accompanying drawings in which:
- FIG. 1: illustrates a schematic diagram of an example system that facilitates electronic payments in accordance with one or more embodiments;
- FIGS. 2A-2B: illustrate a sequence-flow diagram illustrating interactions as part of a payment process between a user and a merchant in accordance with one or more embodiments;
- FIGS. 3A-3D: illustrate user interfaces for initiating a payment transaction as described in reference to FIGS. 2A-2B in accordance with one or more embodiments;
- FIG. 4: illustrates a flow chart of a series of acts in a method of processing payment transactions with tokenized payment credentials in accordance with one or more embodiments;
- FIG. 5: illustrates a detailed schematic diagram of the example system of FIG. 1 in accordance with one or more embodiments;
- FIG. 6: illustrates a block diagram of an example computing device in accordance with one or more embodiments;
- FIG. 7: illustrates an example network environment of a social-networking system in accordance with one or more embodiments; and
- FIG. 8: illustrates an example social graph for a social-networking system in accordance with one or more embodiments.

### DETAILED DESCRIPTION

Embodiments of the present disclosure provide a payment system that provides users with the ability to engage in secure transaction that are device and system agnostic and do not require merchants to integrate with a payment system. For example, the payment system initiates payment transactions using payment tokens by sending the payment tokens to user client-devices associated with the users, which then send the payment tokens to the merchants (e.g., to merchant systems). By sending the payment tokens to the user client-devices, rather than to the merchant systems, the payment system enables the users and merchants to enter into payment transactions irrespective of devices or operating systems of the user client-devices and merchant systems.

As mentioned, the payment system allows users to initiate electronic payment transactions with merchants. Specifically, the payment system receives a request for payment token from a user client-device associated with a user account. For example, when a user selects a request to initiate a payment transaction with the aid of the payment system, the client device sends a request to the payment system to obtain a payment token. Specifically, the merchant system can implement, within the application interface, code that causes the client device to send a request to the payment system for a payment token to initiate a payment transaction. For example, the payment system can provide an application program interface (API) standard that allows third-party entities to embed code in the application interface that causes user client-devices to communicate with the payment system. To illustrate, the user client-devices can use calls to the payment system to request that the payment token be sent to the user client-device. Thus, the merchant system can provide an option for users to make payment using the payment system without requiring the merchant system to provide deep API integration with the payment system that causes the merchant system to communicate with the payment system directly.

In one or more embodiments, the payment system obtains a payment token for initiating a payment transaction from a payment network. In particular, the payment system requests the payment token in response to receiving the request to initiate the payment transaction via the call from the user client-device. To illustrate, the payment system uses a payment credential such as a payment authorization number (e.g., a credit/debit card number) associated with a user account of the user to obtain a payment token. For example, the payment system identifies the payment authorization number associated with the user account and requests a payment token from a card network system associated with the payment authorization number. The card network system associated with the payment authorization number returns a payment token that represents the payment authorization number associated with the user account. The payment system encrypts the payment token and sends the encrypted payment token to the user client-device to initiate payment transactions instead of using the corresponding payment authorization number. By using the payment token to initiate and process payment transactions, the payment system provides a secure electronic payment process that reduces the number of entities and/or communications that include the payment authorization number.

After the payment system sends the payment token to a user client-device, the payment system does not receive the payment token again in connection with the payment transaction. Specifically, the client device forwards to the payment token to the merchant system. The merchant system then processes the payment token as it would process a normal payment credential. For example, the merchant system can forward the payment token to a payment network to process the payment transaction. Thus, the merchant system may not communicate with the payment system during the payment transaction.

In addition to returning the payment token to the payment system, optionally the card network system associated with the payment authorization number returns a single-use cryptogram. In alternative embodiments, the payment system generates the single-use cryptogram and sends the single-use cryptogram to the card network system. The payment system sends the cryptogram with the payment token to the merchant for processing the current payment transaction via a payment network. Specifically, the payment system provides the payment token and the single-use cryptogram to the merchant. The merchant can then initiate the payment transaction by sending the payment token and the single-use cryptogram to a gateway system or other entity in a payment network for processing the payment transaction.

Furthermore, because the cryptogram is single-use, the payment system does not store the cryptogram for use with future payment transactions. Rather, the payment system requests a new single-use cryptogram for each additional payment transaction associated with the user account. The card network system associated with the payment authorization number returns a new single-use cryptogram for a particular payment transaction to the payment system. Thus, for a particular payment transaction, the payment system uses the stored payment token with corresponding single-use cryptogram when initiating the particular payment transaction with a merchant.

In one or more embodiments, the payment system stores the payment token for use with future payment transactions. In particular, the payment system stores the payment token on one or more servers in association with the user account. For example, the payment system can store the payment token at the one or more servers instead of storing the corresponding payment authorization number. Storing the payment token for use with payment transactions rather than storing and using the payment authorization number reduces the risk of exposing user's payment information at the payment system or during payment transactions.

As mentioned, the payment system described herein provides advantages over conventional electronic payment systems. Specifically, configuring the payment token for the user client-device to send to the merchant system allows the payment system to initiate payment transactions with merchant systems that have not integrated with the payment system. For example, the payment system described herein provides a way for merchants to engage in payment transactions with users (i.e., consumers) without requiring the merchants to enter into a contractual or other formal relationship with the payment system. Enabling payment transactions with merchants that are not integrated or registered with the payment system reduces the burden on server devices associated with the payment system by reducing the amount of data that the server devices store and process in connection with payment transactions.

Additionally, such a payment transaction process allows user client-devices and merchant systems to use any type of device and/or operating system to perform payment transactions with the payment system. In particular, the payment system implements the requests for payment tokens and requests to initiate payment transactions with the payment system at a JavaScript (or similar coding language) layer. Because the code can function properly when called from many different client devices or operating systems, the payment system allows merchant systems and users to engage in payment transactions without requiring specific equipment/devices and operating system software. This provides merchant systems and users with flexibility in the payment transaction process.

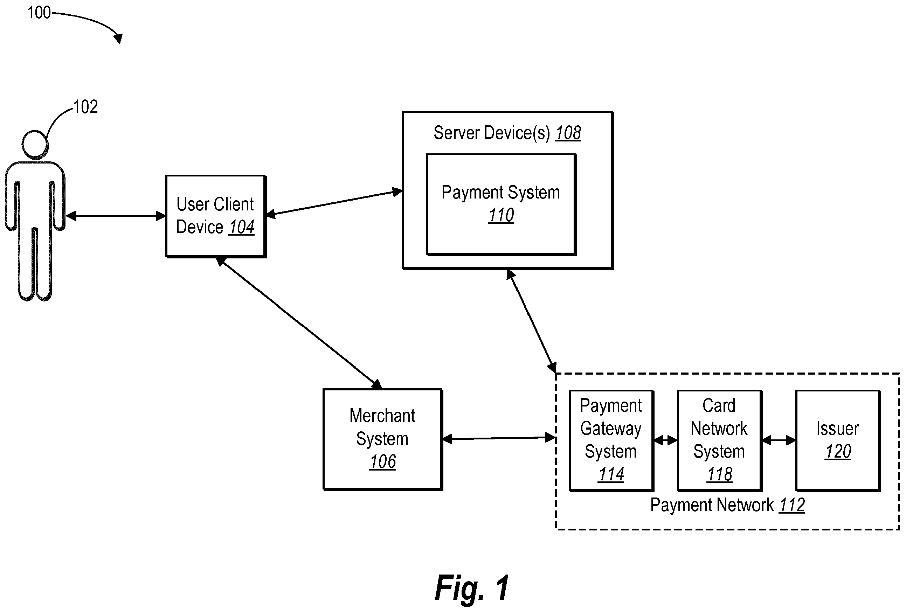

FIG. 1 is a schematic diagram illustrating an environment 100 that includes a payment system 110 in accordance with one or more embodiments. An overview of the environment is described in relation to FIG. 1. Thereafter, a more detailed description of the components and processes of the payment system and other components within the environment are provided in relation to the remaining figures.

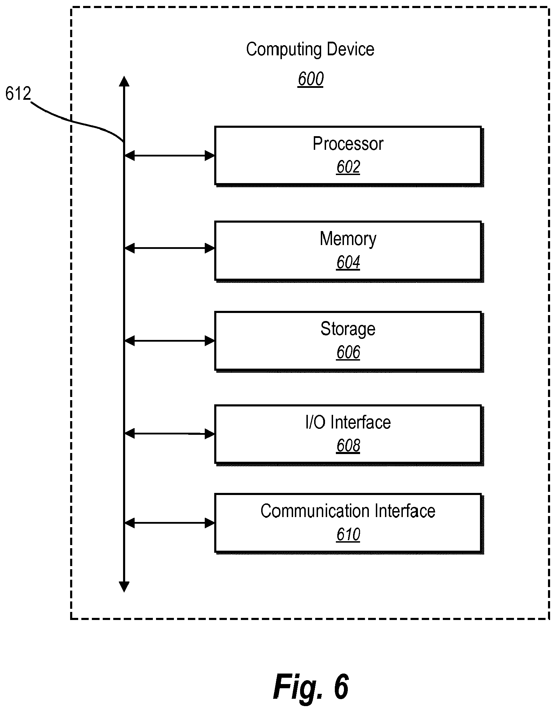

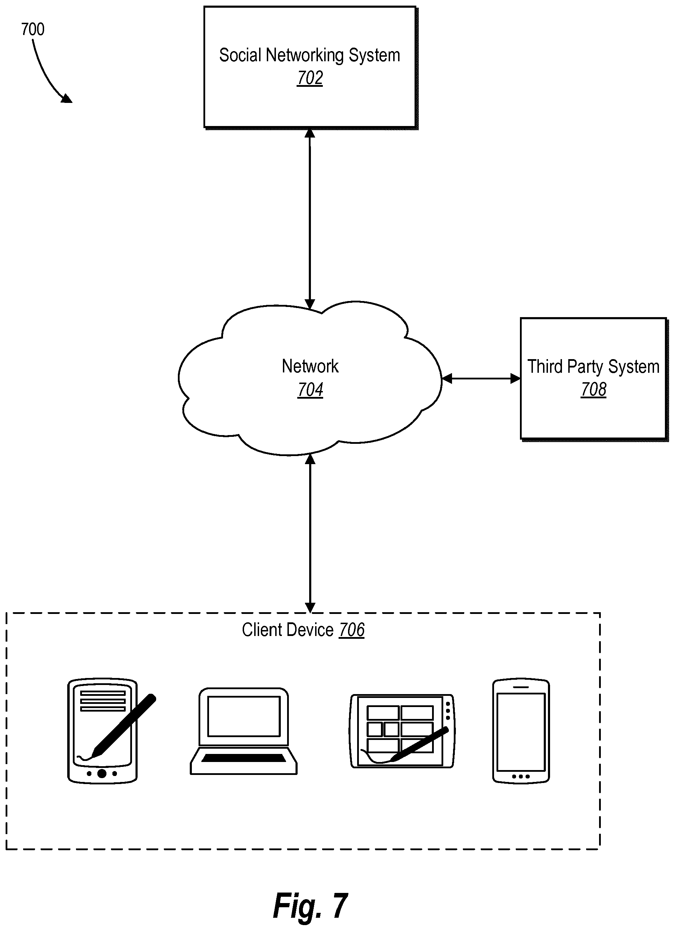

As illustrated by FIG. 1, the environment 100 can include a user, a user client-device 104, a merchant system 106, server device(s) 108 hosting a payment system 110, and a payment network 112. Examples of client devices include mobile devices (e.g., smartphones, tables), laptops, desktops, or any other type of computing device. FIG. 6 and the corresponding description provide additional information regarding computing devices. Moreover, device of the environment 100 can communicate with each other through one or more networks. In one or more embodiments, the network includes the Internet or World Wide Web. The network, however, can include one or more private and/or public networks that use various communication technologies and protocols, as further described below with reference to FIG. 7.

The user 102 can interact with a merchant system 106 to make a purchase. Specifically, the user 102 uses the user client-device 104 to enter into payment transactions with the merchant system 106. As further illustrated in FIG. 1, the user client-device 104 can communicate with the server device(s) 108 hosting the payment system 110. As will be explained in more detail below, the payment system 110 can communicate with various components of the payment network 112 to coordinate a transaction that facilitates the payment between the user 102 and the merchant system 106. The payment network 112 can include a payment gateway system 114, a card network system 118, and an issuer 120. In other embodiments, however, the payment network 112 includes more or fewer actors. Although FIG. 1 illustrates a particular arrangement of the user 102, the user client-device 104, the merchant system 106, the payment system 110, and the payment network 112, various additional arrangements are possible.

As mentioned previously, and as FIG. 1 illustrates, the user 102 can use the user client-device 104 to interface with a merchant system 106. In one or more embodiments, the user 102 can access a client application of the merchant. The client application can comprise a network application, such as a web application or a native application that interfaces with the merchant system 106. The client application can offer the sale of goods and/or services to the user 102. In one or more embodiments, as explained in greater detail below, the server device(s) can include a networking system (e.g., a social networking system) with which the users are registered. To illustrate, the client application can comprise a merchant pages and/or interfaces provide in the social networking system that allow users to view products and services that the merchant(s) provide. Additionally, the merchant systems can provide an option to pay for products and services using the payment system from within the merchant pages and/or interfaces.

The user 102 may begin an order by selecting one or more items or services offered through the client application. To complete the order, the user 102 traditionally would be required to enter up to 20 different payment fields, such as a first name, middle name, last name of the user, a payment card (credit card, debit card, etc.) number, an expiration date (year and/or month) of the payment card, a billing address (including street name, house number, city, state or province, zip code, country, etc.) associated with the payment card, a phone number associated with the payment card, and one or more shipping addresses (including fields similar to the billing address). The payment system 110 can store payment information for the user 102, and can provide at least a portion of the information to the merchant system 106 to simplify the checkout experience of the user 102 and increase security. More specifically, client application can display or otherwise provide a selectable option to use payment information maintained by the payment system 110. If the user 102 selects the selectable option, the payment system 110 can facilitate the payment transaction by providing a payment token that the user client-device 104 can provide to the merchant system 106.

As illustrated in FIG. 1, the payment network 112 includes a payment gateway system 114, a card network system 118, and an issuer of a payment authorization number (e.g., issuer 120). As used herein, the term "payment gateway system" refers to software and servers that transmit transaction information to acquiring banks and responses from issuing banks (such as whether a transaction is approved or declined). Thus, a payment gateway system facilitates communication between banks. Furthermore, payment gateway implement Payment card Industry Data Security Standard (PCI-DSS or PCI). Payment gateway systems help bridge communication protocols and provide security on behalf of a merchant. Payment gateway systems usually charge a per transaction fee. Some example of payment gateway systems include Braintree, Dwolla, Paypal, Authorize.net.

As used herein, the term "card network system" refers to an entity facilitates the payment process between credit card users, merchants, and issuers. Card network systems can also dictate where credit cards can be used, authorize credit card transactions, process transactions, and set terms of transactions. Some example of card network systems include VISA, MASTERCARD, AMERICAN EXPRESS, and DISCOVER.

As used herein, the term "issuer" refers to a financial institution (e.g., a bank) that issues credit cards to consumers and services their accounts. Issuers can also be a card network system or a payment gateway system. Some example of card network systems include CHASE, BANK OF AMERICA, WELLS FARGO, U.S. BANK, and CITIBANK.

As used herein, the term "payment authorization number" refers to a number that authorizes access to the corresponding payment account. For example, a payment authorization number can be a credit card number or debit card number.

In one or more embodiments, the payment system 110 communicates with the card network system 118 associated with a payment authorization number of the consumer to obtain a payment token. As used herein, the term "payment token" refers to a tokenized version of a payment authorization number. Specifically, a network payment token can include a hashed or otherwise obfuscated version of the payment authorization number that includes a plurality of characters that the card network system 118 maps to the particular payment authorization number.

Once the payment network 112 provides the payment token to the payment system 110 at the server device(s) 108, the server device(s) 108 then encrypt and send the payment token to the user client-device 104 to verify and pass to the merchant system 106 to initiate the payment transaction and process the user's purchase. The server device(s) 108 can also gather and send user information for the user to the user client-device 104 in connection with the payment token. The user information can include identifying information about the user, such as billing information or address information as described above.

In at least some implementations, the card network system 118 also sends a cryptogram associated with the payment transaction to the user client-device 104 with the payment token. As used herein the term "cryptogram" refers to a code assigns to the payment transaction for use in authorizing use of the payment token for the payment transaction. To illustrate, a cryptogram can be a numeric code or other value that allows the card network system 118 to validate the use of the payment token for the corresponding payment transaction.

After the user client-device 104 receives the payment token, the user client-device 104 sends the payment token to the merchant system 106. The merchant system 106 then sends the payment token, along with other payment information, to the payment gateway system 114 to process the payment transaction. In one or more embodiments, the payment gateway system 114 also communicates with the card network system 118 to transmit the payment information. Whether the payment gateway system 114 or the card network system 118 uses the payment token to determine the corresponding payment authorization number depends on whether the payment token is a gateway payment token or a network payment token. In either case, the payment network 112 identifies the corresponding payment authorization number and authorizes the payment transaction to transfer funds from a payment account of the user 102 to a payment account of the merchant system 106.

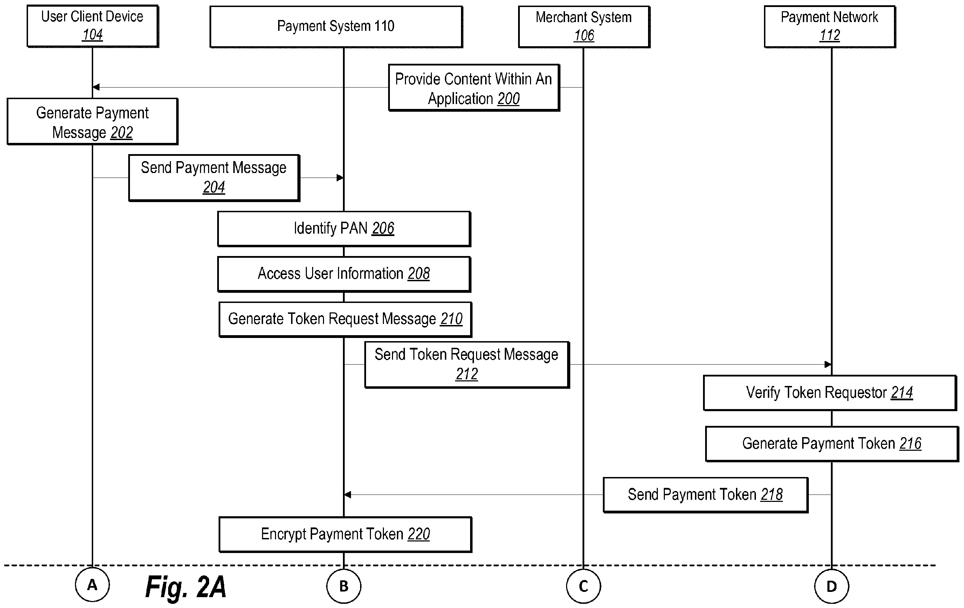

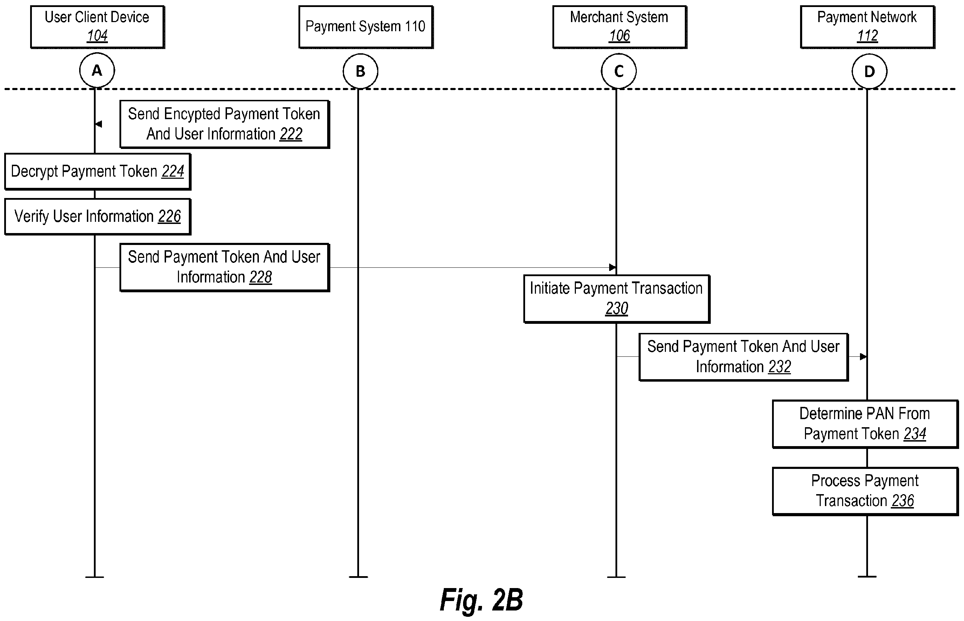

As discussed, the systems and components discussed above with reference to FIG. 1 can allow users (i.e., consumers) to easily, effectively, and securely engage in payment transactions with merchants. FIGS. 2A-2B illustrate example process diagrams of one or more example embodiments of processes implemented by the payment system 110 discussed above. Consistent with environment 100 illustrated in FIG. 1, FIGS. 2A-2B illustrate (according to a sequence flow of operations) a user client-device 104, a merchant system 106, payment system 110 implemented on server device(s) 108, and a payment network 112.

In one or more embodiments, a process for a user initiating a payment transaction with a merchant can begin with the merchant system 106 providing content within an application 200 (e.g., a client application as described above) to the user client-device 104. In particular, the merchant system 106 provides, within an application, an interface by which the user can browse goods or services associated with a merchant. The application can include a browser application, mobile application, desktop application, or other computing application that runs on the user client-device 104.

According to one or more embodiments, the user client-device 104 allows the user to interact with the content from the merchant system 106. For instance, the user client-device 104 can allow the user to view the interface for browsing goods or services associated with the merchant by opening the application or by otherwise navigating to the interface. To illustrate, the application can be a proprietary application created by and/or otherwise associated with the merchant. Alternatively, the application can be an application that allows the user to view one or more different interfaces associated with different entities, such as a web browser that provides access to the Internet.

Additionally, the user can navigate one or more pages or interfaces of content to view goods and services associated with the merchant. To illustrate, the user can navigate the content associated with the merchant by interacting with the user client-device 104. Interacting with the user client-device 104 can also cause the user client-device 104 to communicate with the merchant system 106 to retrieve the content. After the user identifies a good or service that the user would like to purchase, the user can interact with the user client-device 104 to select an option to purchase the identified good or service with the aid of the payment system 110 hosted by the server device(s) 108 (e.g., Pay With Facebook). Selecting the option to purchase the identified good or service causes the user client-device 104 to generate a payment message 202.

In one or more embodiments, the application 200 includes code that causes the user client-device 104 to communicate with the payment system 110 in response to section of the option to purchase the identified good or service with the aid of the payment system 110. Specifically, the code of the application 200 can cause the user client-device 104 to make a call to the server device(s) 108 based on published API protocols available to the merchant system 106. For instance, the code can include a JavaScript command to send a request to the server device(s) 108 for a payment token and optionally one or more items of information. To illustrate, implementing the code at the JavaScript (or other language) layer causes the user client-device 104 to generate requests to initiate payment transactions. As described in more detail below, implementing the requests at the JavaScript layer also allows the payment system 110 to facilitate payment transactions for users without requiring the server device(s) 108 to directly communicate with the merchant system 106.

Generating the payment message can include identifying payment information for a payment transaction between the user and the merchant. For example, the payment message can include a user identifier, a merchant identifier, a payment amount, a payment authorization number (or an indication of a payment method with a corresponding payment authorization number), and/or other information that allows the payment system 110 to begin the payment transaction process. According to various examples, the user client-device 104 can obtain payment information for the payment message from interactions between the user and merchant, a data manager on the user client-device 104, and/or from user input. The user client-device 104 then sends the payment message 204 to the payment system 110.

In response to receiving the payment message from the user client-device 104, the payment system 110 identifies a personal authorization number 206 for the user. In particular, the payment system 110 can identify the personal authorization number from the payment message. For instance, the payment message can include an identifier that the payment system 110 assigned to the payment authorization number previously provided to the payment system 110. Alternatively, the payment message can include the payment authorization number, if the user has not stored information associated with the payment authorization number with the payment system 110. In still further embodiments, the payment system 110 can prompt the user to provide a payment authorization number or allow the user to modify or add a new payment authorization number. As mentioned, the personal authorization number can be a credit card number or other account number associated with a payment account of the user. The payment system 110 also identifies additional payment information included in the payment message.

The payment system 110 also access user information 208 associated with the user and/or the payment authorization number. Specifically, the payment system 110 can access a user account (e.g., a social network account) associated with a user identifier from the payment message to access identifying information about the user for use in processing the payment transaction. For example, the user information can include billing address information for the user such as the user's address, phone number, and contact information. Additionally, the user information can also include additional identifying information about the user that may allow the user to engage in payment transactions with merchants.

The payment system 110 uses the payment information included in the payment message from the user client-device 104 to generate 210 a token request message. Specifically, the payment system 110 generates a token request message to request a payment token associated with the identified payment authorization number. The token request message includes the payment authorization number and identification information that allows the card network system 118 to verify the identity of the consumer and/or the token requestor (i.e., the payment system 110). The payment system 110 requests the card network system 118 to provide the payment token for use in processing payment transactions for the consumer, rather than using the payment authorization number.

In one or more embodiments, identification information included in the token request message includes a token requestor identifier. For example, the token requestor identifier can be a unique identifier that the card network system 118 previously assigned to the payment system 110. To illustrate, the token requestor identifier may be a fixed length value of 12 characters. The token requestor identifier is an identifier that allows the card network system 118 to determine an identity of the token requestor from the token request message.

In one or more embodiments, the payment system 110 can also determine whether network tokenization of a particular payment authorization number is available. Specifically, the payment system 110 can identify at least one attribute of the payment authorization number, such as the card type or consumer enrollment, based on one or more digits in the payment authorization number (e.g., based on a bank identification number). The payment system 110 can then determine whether the card network system 118 associated with the payment authorization number provides payment tokens for the payment authorization number based on the identified attribute(s) of the payment authorization number. For example, the payment system 110 can determine that certain card network systems 118 provide payment tokens, while other card network systems 118 do not. Similarly, certain card types or payment authorization tokens from a card network system 118 may be tokenized, while others associated with the same card network system 118 may not be tokenized.

If a particular payment authorization number is not tokenizable by a card network system 118, the payment system 110 obtain a token from a third-party payment processor. For example, the payment system 110 can request a single-use payment authorization number from a third-party payment processor for use with the current payment transaction.

The payment system 110 then sends the token request message 212 to the card network system 118. Upon receipt of the token request message, the card network system 118 identifies the payment authorization number from the token request message and verifies the authenticity of the payment authorization number. For example, the card network system 118 identifies the payment authorization number in a database of payment authorization numbers associated with the card network system 118. Additionally, the card network system 118 can identify additional information associated with the payment authorization number, such as an identity of the consumer, security information associated with the consumer, and payment transaction information from the token request message, as provided by the server device(s).

In one or more embodiments, the card network system 118 verifies the token requestor 214 using the token requestor identifier in the token request message. The identity of the token requestor allows the card network system 118 to identify a trust level established between the card network system 118 and the payment system 110. Specifically, the card network system 118 may establish trust relationships with one or more token requestors. For example, each trusted token requestor may request payment tokens from the card network system 118 without requiring additional security information.

If another entity that is not trusted by the card network system 118 attempts to request a payment token from the card network system 118, the card network system 118 may reject the request. By establishing trust relationships with token requestors and providing tokens only to trusted requestors, the card network system 118 may reduce the risk of fraudulent requests for payment tokens. Additionally, the use of trusted requestors allows the card network system 118 to reduce the amount of identification information that the consumer must provide to authorize payment transactions. In alternative embodiments, the card network system 118 requests additional security information to verify the authenticity of requests from untrusted requestors.

Once the identity of the payment system 110 is verified, the card network system 118 then generates a payment token 216 for the payment authorization number-and in some instances, a cryptogram-for the payment transaction. In particular, the card network system 118 generates a payment token that represents the payment authorization number to entities associated with the payment transaction process. For example, the payment token can be a numerical value with a variable number of digits within a predetermined number of digits (e.g., a variable field of up to 19 digits).

In one or more embodiments, the payment token has the same number of digits as the payment authorization number so that each entity associated with the payment transaction process sees the payment token as a valid payment authorization number. Specifically, the payment token may have a similar or same bank identification number and similar numbering logic as the original payment authorization number. Alternatively, the number of digits may not be based on the payment authorization number, such that the payment token may have a different number of digits than the payment authorization number.

As mentioned, the card network system 118 can generate the cryptogram for use with the current payment transaction. Specifically, the cryptogram is a single-use code or value that ties or scopes the payment token to the current payment transaction. In one or more embodiments, the cryptogram scopes the payment token to the current payment transaction using transaction information such as payment amount, domain, and/or other information that specifically identifies the payment transaction. The cryptogram allows the card network system 118 to verify that the payment token has been authorized for use with the current payment transaction. Thus, the card network system 118 denies requests from merchants to process payment transactions without a cryptogram, such that the card network system 118 denies unauthorized uses of the payment token. Additionally, because the cryptogram is associated with the specific payment transaction, the cryptogram is a single-use cryptogram and may not be used with other payment transactions. In one or more alternative embodiments, the payment system 110 is allowed to use a cryptogram more than once for subscriptions or other recurring payments. While the figures illustrate the card network system 118 as a single entity, one will appreciate in light of the disclosure herein that the disclosure is not so limited. In particular, the card network system 118, like the payment system 110, can be implemented across multiple different devices. For example, the card network system 118 can comprise a token provisioning service that is hosted by a separate system than the portion of the card network system 118 that processes payments. The token provisioning service of the card network system 118 can generate the payment tokens and the cryptograms in one or more embodiments.

In one or more embodiments, the payment system 110 rather than the card network system 118 generates the cryptogram. In such cases, the token request message 212 can include the cryptogram. In any event, the card network system 118 can sent the payment token and optionally the cryptogram to the issuer 120.

The card network system 118 then sends 218 the payment token and optionally the cryptogram to the payment system 110. According to one or more embodiments, the payment system 110 associates and stores the payment token with the user profile or user account of the consumer. As described in more detail below, once the payment system 110 has received a payment token for the consumer, future payment transactions involving the consumer can use the stored payment token instead of the corresponding payment authorization number.

After receiving the payment token from the payment network 112, the payment system 110 encrypts the payment token 220. For example, the payment system 110 encrypts the payment token for providing to the user client-device 104. Specifically, the payment system 110 can encrypt the payment token using an encryption key. Additionally, the payment system 110 can encrypt a data package containing the payment token and optionally a cryptogram and/or the user information (or other payment information) to provide to the user client-device 104. The payment system 110 can also sign the encrypted data package with a key associated with the payment system 110 to allow the user client-device 104 to verify that the package is from the payment system 110.

According to one or more embodiments, the payment system 110 encrypts the payment token and the user information using an encryption key that only the user client-device 104 can decrypt. For example, the payment system 110 can use a public/private key pair. Thus, the user client-device 104 would then decrypt the payment token and user information and use the information to initiate a payment transaction with the merchant system 106.

Alternatively, the payment system 110 can encrypt the payment token using an encryption key that the merchant system 106 can also decrypt. For example, the payment system 110 can encrypt the data package using an encryption key with an associated private key that is passed to the merchant system 106.

In either scenario, the payment system 110 sends the encrypted payment token (and optionally user information and the cryptogram) 218 to the user client-device 104. For example, the payment system 110 sends the encrypted payment token and user information to the user client-device 104 in a data package or in a payment transaction message. The payment system 110 can transmit the data package in a way that is not visible or transparent to the user (i.e., such that the user does not have access to the contents of the data package while encrypted).

Upon receiving the encrypted data package, the user client-device 104 decrypts the payment token 224 (and user information and cryptogram, if applicable). In particular, the user client-device 104 can use the decryption key associated with the encryption key that the payment system 110 used to encrypt the data package. The user client-device 104 can use the decryption key to extract the information from the data package for use in allowing the user to initiate the payment transaction with the merchant system 106.

Additionally, the user client-device 104 can present one or more items of payment information on a display device to verify the payment information 226. For instance, the user client-device 104 can display user information, along with the selected payment method for the payment authorization number, in an interface associated with the merchant system 106. To illustrate, the user client-device 104 can auto fill the payment information into the interface (e.g., into a billing form provided by the merchant). Thus, the user client-device 104 leverages the interface associated with the merchant system 106 to present the payment information to the user for verification without requiring the server device(s) 108 to send the information directly to the merchant system 106 or without requiring the user client-device 104 to redirect to a form associated with the payment system 110.

To verify information associated with the payment transaction, the user can view the information within the interface and determine whether the information is correct. As mentioned, the user client-device 104 can leverage an interface that the merchant system 106 provides to the user client-device 104 within a client application. Displaying the information in a fillable form within the interface can allow the user to view and/or edit the information. To illustrate, the user can view and verify the payment method, such as by viewing an abbreviated version of the payment authorization number (e.g., displaying only the last 4 digits of the payment authorization number) or identifying information for the user (e.g., name, address, security questions, etc.).

According to various examples, the user can determine that the payment method and/or the user's identifying information is correct and select an option to use the information as entered. Alternatively, the user can determine that one or more of the items of information is incorrect and can edit the information. Editing the information can cause the user client-device 104 to send the edited information to the payment system 110, which can then store the edits with a user account for the user.

Once the user has verified the payment token and associated information, the user client-device 104 sends the payment token and user information 228 to the merchant system 106 in accordance with the payment processing procedures that the merchant system 106 uses to process credit or debit card transactions.

In one or more embodiments, the payment token includes an obfuscated value of the payment authorization number that appears to be a valid payment authorization number. The merchant system 106, however, may only be able to view the obfuscated value, even after decrypting the data package, such that the merchant system 106 never has access to the actual payment authorization number. Because the obfuscated value can appear to be a valid payment authorization number, the merchant system 106 can still process the payment transaction as if operating with the actual payment authorization number. Additionally, a cryptogram can resemble a security code, such as a code verification value ("CVV number"), so that the merchant system 106 identifies the payment information as valid.

The merchant system 106 then initiates the payment transaction 230 using the information provided from the user client-device 104. Specifically, the merchant system 106 identifies the payment token-as well as a cryptogram, if applicable-from a data package from the user client-device 104. Additionally, the merchant system 106 can identify the payment amount, purchase information (e.g., product or service), user identification information (e.g., name, address, shipping information), and other information for processing the payment transaction. By receiving the payment token from the user client-device 104, the merchant system 106 never receives or sees the payment authorization number associated with the user's payment account. Additionally, the merchant system 106 is not required to integrate with the payment system 110 because the payment token is requested and passed at the JavaScript layer.

The merchant system 106 sends the payment token and user information 232 to the payment network 112. The payment network 112 can include a payment gateway system that receives the payment token and payment information from the merchant system 106 and sends the payment token and payment information to a card network system to complete the payment transaction. In other embodiments, the payment gateway system can use the payment token to obtain a payment authorization number for submitting to the card network system.

In either case, the payment network 112 determines the payment authorization number 234 and additional payment information (e.g., a cryptogram) to determine whether the payment transaction is valid. For example, the payment network 112 can map the payment token to the payment authorization number in a database. The payment network 112 can search for the payment token in the database to find the payment authorization number in an entry associated with the payment token. Alternatively, the payment token may be an encrypted version (e.g., hashed version) of the payment authorization number, and the payment network 112 can decrypt the payment token to obtain the payment authorization number.

After identifying the payment authorization number, the payment network 112 can process the payment transaction 236. Specifically, processing the payment transaction involves using the payment authorization number to authorize a transfer of funds from a payment account associated with the payment authorization number to a payment account associated with the merchant. For example, the payment network 112 can transfer funds from the payment account of the user to the payment account of the merchant by communicating with a bank system associated with the merchant.

More specifically, the merchant system 106 sends the payment token and the cryptogram, with the necessary payment transaction information, to the payment gateway system 114. The payment gateway system 114 then sends the payment token, the cryptogram, and the payment transaction information to the card network system 118. The card network system 118 verifies the cryptogram to determine whether the payment transaction is valid. A valid cryptogram signifies to the card network system 118 that the payment transaction is valid, and was initiated via a trusted token requestor and optionally is for a verified amount from a verified merchant.

The card network system 118 also determines the payment authorization number based on the payment token. For example, the card network system 118 can map the network payment token to the payment authorization number in a database. The card network system 118 can search for the payment token in the database to find the payment authorization number in an entry associated with the payment token.

After identifying the payment authorization number, the card network system 118 can process the payment transaction. Specifically, processing the payment transaction involves sending the payment authorization number to the issuer 120 so that the issuer can authorize a transfer of funds from a payment account associated with the payment authorization number to a payment account of the merchant. For example, the issuer 120 can transfer funds from the payment account of the consumer to the payment account of the merchant by communicating with a bank system (acquirer) associated with the merchant.

Alternatively, the card network system 118 can send the payment token to the issuer 120. The issuer 120 then determines the payment authorization number based on the payment token. For example, the issuer 120 can map the payment token to the payment authorization number in a database. The issuer 120 can search for the network payment token in the database to find the payment authorization number in an entry associated with the network payment token. The issuer 120 can authorize a transfer of funds from a payment account associated with the payment authorization number to a payment account of the merchant. For example, the issuer 120 can transfer funds from the payment account of the consumer to the payment account of the merchant by communicating with a bank system (acquirer) associated with the merchant.

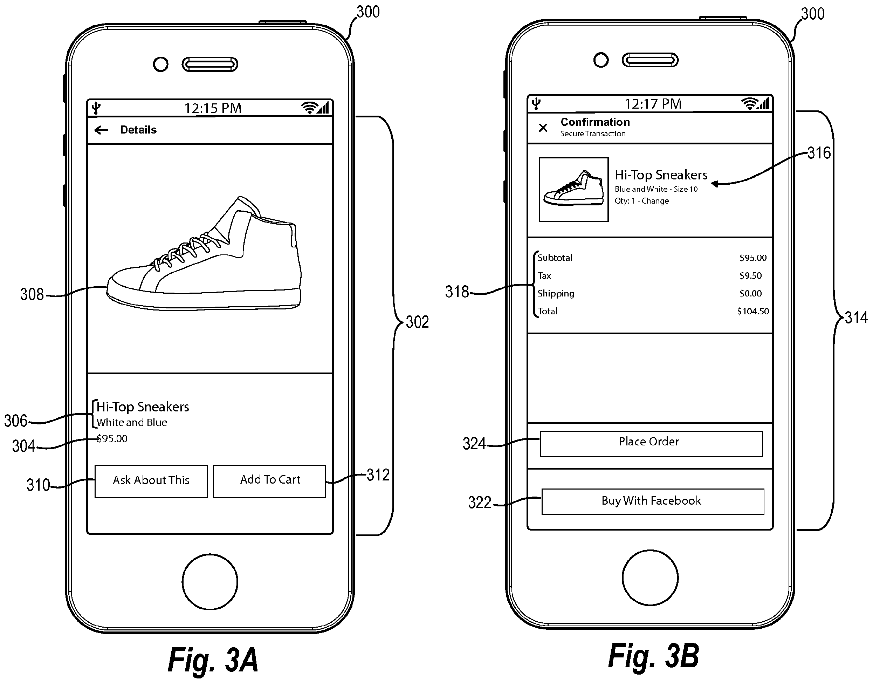

As will be described in more detail below, the components of the payment system 110 as described with regard to FIG. 1, can provide, along and/or in combination with the other components, one or more graphical user interfaces. In particular, the components can allow a user to interact with a collection of display elements for a variety of purposes. In particular, FIGS. 3A-3D and the description that follows illustrate various example embodiments of the user interfaces and features of a client application that allow a user to enter into a payment transaction with a merchant.

For example, FIGS. 3A-3D illustrate a user client-device 300 with various views of GUIs provided by a client application to facilitate electronic payments between a user and a merchant. Specifically, the client application allows the user to view information associated with goods and services provided by a merchant system and to enter into a payment transaction with the merchant. As described in more detail below, the user can view an interface containing content that the merchant system provides within the client application. Additionally, the user can make purchases using the client application and engage in electronic payment transactions with the merchant.

As illustrated, the user client-device 300 includes a handheld device. As used herein the term "handheld device" refers to a device sized and configured to be held/operated in a single hand of a user. In additional or alternative example, however, any other suitable computing device, such as, but not limited to, a tablet device, a handheld device, larger wireless devices, laptop or desktop computer, a personal-digital assistant device, and/or any other suitable computing device can perform one or more of the processes and/or operations described herein.

In one or more embodiments, user can interact with display elements in one or more user interfaces of the client application to initiate a payment transaction with a merchant to purchase a good or service. As mentioned, the client application provides one or more interfaces associated with the merchant system. In one or more embodiments, the client application is an application provided by the merchant, such as a mobile application made available through a mobile application store. Alternatively, the client application can be a third-party application that allows the user to access a variety of content, such as a web browser that provides access to content from a plurality of different merchants.

As illustrated in FIG. 3A, the client application can include a merchant interface 302. The merchant interface 302 can display a product (e.g., a good or service) provided by a merchant that users may purchase using a payment system, as described herein. According to one or more embodiments, the merchant interface 302 includes a plurality of products or services available from the merchant. For example, the merchant interface 302 may include a listing of products, each of which may be selectable and/or have its own merchant page. Selecting the merchant page for a specific item displays details about the corresponding product. For example, the merchant page for a given product may display the price 304, product specifications 306, an image 308 of the product, and related items available from the merchant.

In one or more embodiments, the client application also allows the user to communicate with the merchant about the displayed item. For example, the merchant interface 302 can present a communication option 310 to communicate with the merchant. To illustrate, selecting the communication option 310 can cause the client application to open a messaging interface that allows the user to communicate (e.g., by email or by way of an integrated messaging service) with the merchant. In one or more embodiments, a network application associated with the payment system 110 provide the messaging interface and facilitates the communications. The user can discuss pricing, purchase options, delivery options, availability, customization, and/or other information about the displayed product.

The merchant product interface can also display an add-to-cart option 312 for a product on the merchant page for the product. Selecting the add-to-cart option 312 can cause the client application to add the product to a virtual shopping cart and/or display a purchase interface. FIG. 3B illustrates a check-out or virtual shopping cart interface 314 to purchase the product illustrated in FIG. 3A. When the user selects the add-to-cart option 312, the client application adds the selected product to a virtual shopping cart and displays the check-out interface 314 with the contents of the shopping cart. The user can select a plurality of products to add to the shopping cart prior to purchasing the product(s).

The purchase interface includes purchase information including payment information. In particular, the purchase information includes product details 316 (including the quantity of the product), and a purchase price 318. Although FIG. 3B illustrates a set of details associated with the shopping cart, the check-out interface 314 may include additional or alternative details that allow the user to verify and enter purchase information.

The user can select the place order option 324, upon which the client application will open a payment information interface into which the user can enter payment information, such as a billing address, shipping address, credit card information, etc. Unfortunately, selecting the place order option 324 can require a user to provide detailed payment information. In many cases, a user may need to fill-in up to twenty information fields. It is common for potential consumers to have difficulty entering payment information, run-out of time, or question otherwise become frustrated with the checkout process. Such frustrations often cause potential consumers to abandon their commerce transactions. Frustration with commerce checkout processes is often exacerbated when using a mobile device due to the small screen and difficulty of typing-in large amounts of information. Furthermore, selecting the place order option 324 can require a user to enter and share their payment authorization number with the merchant or the merchant's payment gateway network.

As discussed above, one or more embodiments, avoid the foregoing problems, by providing a selectable option 322 to complete the transaction with the payment system 110. The selectable option 322 to complete the transaction with the payment system 110 can comprise a glyph (i.e., a mark, an icon, a graphic, a portion of text, etc.) indicating that the user may utilize the payment system 110 to complete the purchase of the items in the virtual cart. The selectable option 322 can comprise a button presented in the checkout user interface 314, a selectable overlay that appears over the checkout user interface 314, a plug-in, a pop-up, or other selectable option. For example, in one or more embodiments such as when the client application comprises a web application, an iframe may be added to the code defining the web page. Additionally or alternatively, the client application can call an SDK function that renders the selectable option 322.

One will appreciate in light of the disclosure herein that the use of an SDK function or an iframe are two examples of ways to render or call the selectable option 322. Embodiments of the present disclosure, however, are not limited to the use of an SDK function or an iframe. More particularly, rather than a plug-in software application that operates or executes in the context of a browser (e.g., a web browser) or other application client that consumes structured documents, the functionality described herein can be incorporated directly into a browser client application, as opposed to being a plug-in. For example, the open graph protocol enables any web page to integrate into the social graph. In particular embodiments, the presence of basic metadata within the structured document allows objects within the structured document to become graph objects or nodes. In order to turn web pages into graph objects, open graph protocol <meta> tags and the selectable option 322 are included in the web page. The open graph protocol defines four properties: title, type, image, url.

In still further embodiments, XFBML or HTML5 may be used to implement, render, or call the selectable option 322 (and/or payment information). XFBML and HTML5 may require that the page make a call to a Javascript SDK, may be added to the code. In particular embodiments, the Javascript SDK enables a web page to access some or all of the payment information and/or the selectable option 322. Still further the client application can use the Javascript SDK to listen to events so that the client application knows in real time when someone clicks or otherwise selects the selectable option 322.

Thus, one will appreciate that the selectable option 322 can be implemented, rendered, or called using any number of methods or protocols. Examples of such methods and protocols are described in more detail in U.S. Patent Application Serial. No. 13/116,945, filed on May 26, 2011, entitled "Social Data Inputs" in the content of a "Like Button." The entire contents of the foregoing application are hereby incorporated by reference in their entirety.

Upon the user selecting the selectable option 322, the user client-device 300 sends a payment message 204 requesting a payment token to the payment system 110. Specifically, the request for the payment token can be a JavaScript call from the user client-device 300 in response to the user selecting the selectable option 322 to complete the transaction with the payment system 110. For example, the selectable option 322 can be associated with JavaScript code or other code that causes the user client-device 300 to send a request to the payment system 110 to request a payment token for a payment transaction between the user and the merchant. To illustrate, the JavaScript call can include information that allows the payment system to initiate the payment transaction. For instance, the JavaScript call can include a user identifier, a device identifier for the user client-device 300, and a merchant identifier, though the JavaScript call can include additional or different information for the user client-device 300 to send to the payment system.

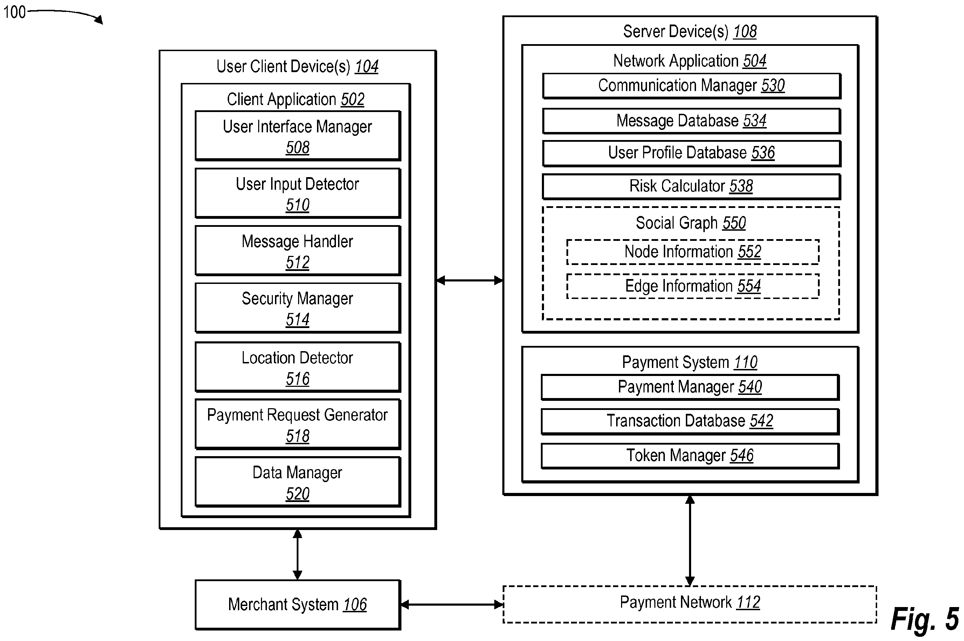

For example, the client application can obtain, identify, or otherwise discover a user identifier for the user for the network application 504 (see Fig. 5). For example, the client application can access an obfuscated (e.g., hashed, encrypted, or otherwise algorithmically transformed) user identifier of the user existing on the user client-device 300 of the user. This user identifier can identify a user profile/account for that user of the network application 504 (e.g., a social networking application). In one or more embodiments, the user identifier is accessed from a portion of shared memory accessed by or reserved by the network application 504, and may only exist if the user is currently "logged on" to the network application 504. In one or more other embodiments, the user identifier is accessed from a cookie (e.g., HyperText Transfer Protocol (HTTP) cookie) or from application cache (e.g., a HyperText Markup Language version 5 (HTML5) application cache) on the user client-device 300.

This process may serve as the authentication for the user, as the existence of a proper obfuscated user identifier for the network application 504 on the user client-device 300 indicates that the user has already been authenticated by the network application 504, and thus the client application may rely upon this previous authentication. Additionally, at this point of the checkout process, there is no security or privacy leak of the user's details to the client application or the merchant, which only has the obfuscated user identifier.

In response to the payment message 204 requesting a payment token, the payment system 110 can use the ID to identify payment information of the user 102 stored by the payment system 110. When the user ID comprises an obfuscated user identifier, the network application 504 can transform the user ID into a non-obfuscated user identifier using a transformation function, which includes but is not limited to the application of a symmetric key cryptographic function to the obfuscated user identifier, the application of a public-key (asymmetric key) cryptographic function to the obfuscated user identifier, or the comparison of the obfuscated user identifier to a list of obfuscated user identifiers mapped to non-obfuscated user identifiers.

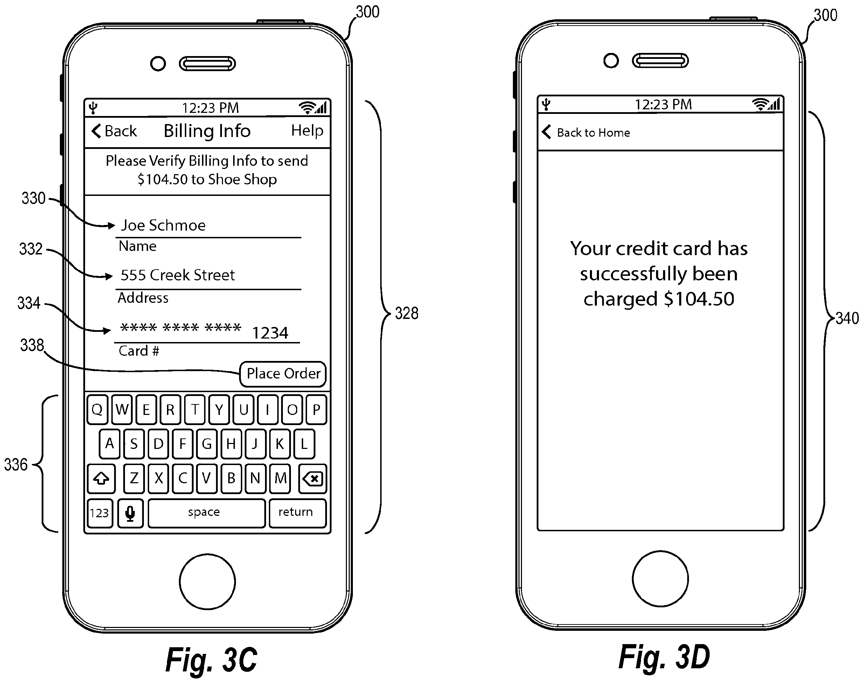

In response to the JavaScript call, the payment system 110 can obtain the payment token, encrypt the payment token, and send the payment token to the user client-device 300. In one or more embodiments, the user client-device 300 can decrypt the payment token to allow the user to verify information associated with the payment token. For example, the user client-device 300 can decrypt data received from the payment system and auto-fill the payment information and a payment card label for the payment token into a payment information interface 328 as shown in FIG. 3C.

The payment information can comprise any available information for the following: a name 330 (e.g., first, middle, last), an expiration date (year and/or month) of the payment card, a billing address 332 (including street name, house number, city, state or province, zip code, country, etc.) associated with the payment card, a phone number associated with the payment card, and one or more shipping addresses (including similar fields as the billing address). As previously mentioned, the payment system 110 will not provide the client application with the payment card number of the user. Instead, the payment system 110 will provide a payment card label 334 representing the payment.

As mentioned previously, the payment token can be specific to the client application, user, amount and/or cart specific (i.e., valid only for a specific application, user, amount and/or cart). In still further embodiments, the payment token can be specific to a user/commerce application combo. The payment system 110 or the card network system 118 can also associate any number of different use parameters. For example, the payment token can be a single use token. Thus, once used once, the payment token can become invalid. Additionally, the payment system 110 or the card network system 118 can assign the payment token a window of validity (e.g., 10 minutes, 1 hour, 1 day) after which the payment token becomes invalid. Still further, e- payment system 110 or the card network system 118 can optionally assign the payment token a time-to-live. The payment system 110 or the card network system 118 can tie the detailed cart information to the payment token. This can help ensure that the payment token is only valid for the purchase of the cart.

In one or more embodiments, the payment information interface 328 allows a user to change information associated with a payment token. For example, the user can select a field in the payment information interface 328 and modify the information or enter new information. To illustrate, if a billing address associated with a particular payment credential changes, the user can enter the new billing address into the payment information interface 328. The user client-device 300 can then send the changed information to the payment system to modify on the payment system side (e.g., in a user account for the user). The next time the user selects the payment method for a payment transaction, the payment system 110 can obtain a payment token for the selected payment credential and include the updated user information with the payment token.

Upon the client application rendering the payment information interface 328 with the payment information in the payment fields, the user can confirm the purchase of the order or otherwise complete the transaction in as little as a single click or user input in relation to the place order option 338. For example, when the e payment system 110 provides information for each of the required payment fields, the user can select a "pay" or "order" button or other selectable option to complete the transaction. In alternative embodiments, the user may be required to complete one or more payment fields for which data was not supplied or otherwise perform additional operations to complete the transaction.

Upon the user confirming the order, the user client-device 300 passes the payment token on to the merchant system. In particular, if the user client-device 300 decrypted the payment token and user information associated with the payment token, the user client-device 300 can re-encrypt the payment token and user information to send to the merchant system. If the user client-device 300 did not decrypt the payment token and user information associated with the payment token, the user client-device 300 can pass on the encrypted token from the payment system to the merchant system. As such, the payment system provides the payment token according to a configuration that allows the user client-device 300 to pass the payment token and other related payment information to the merchant system without the payment system communicating directly with the merchant system. Additionally, the payment system provides the most up-to-date payment information to the user client-device each time a user enters into a payment transaction with a merchant.

After the user client-device 300 provides the payment token and other relevant information to the merchant system, the merchant system processes the payment transaction by sending the payment token to a payment network. The payment network uses the payment token to determine a payment authorization number based on whether the payment token is a gateway payment token or a network payment token (e.g., whether a payment gateway system or a card network system generated the payment token). Additionally, the payment token processes the payment transaction by transferring funds from the user's payment credential to a payment credential of the merchant system.

In response to successfully completing the payment transaction, the user client-device 300 can receive a notification from the payment system that the payment transaction is complete and cause the client application to display a successful payment message 340. The successful payment message 340, as illustrated in FIG. 3D, can indicate that the user's payment account was successfully charged for the payment amount. A completed payment transaction can also cause the client application to update a transaction history for the user, which the user may access to view details about previously initiated/completed/canceled payment transaction. Alternatively, if the payment transaction does not successfully complete, the client application can display a failed payment message within the client applications.

Additionally, after receiving an indication that the payment transaction is complete, the user client-device 300 can send a message to the payment system indicating successful completion of the payment transaction. The payment system can store the information with a user account for the user. Storing the payment information allows the payment system to provide a purchase history to the user if the user requests.

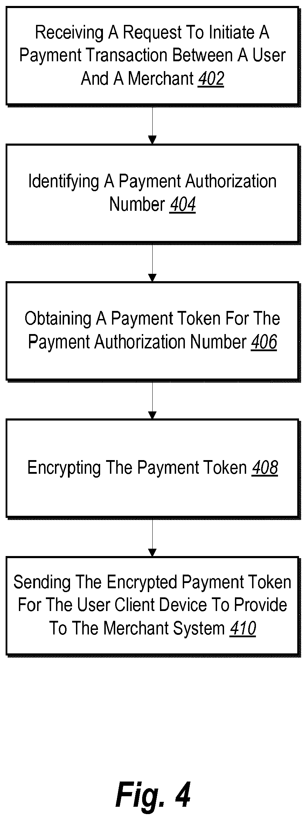

FIGS. 1-3D, the corresponding text, and the examples, provide a number of different systems and devices for processing electronic payment transactions using a payment system. In addition to the foregoing, embodiments can be described in terms of flowcharts comprising acts and steps in a method for accomplishing a particular result. For example, FIG. 4 illustrates a flowchart of an exemplary method in accordance with one or more embodiments.

FIG. 4 illustrates a flowchart of a method 400 of processing payment transactions with tokenized payment credentials. The method 400 includes an act 402 of receiving a request to initiate a payment transaction between a user and a merchant. For example, act 402 involves receiving, from a user client-device 104 associated with a user, a request to initiate a payment transaction between the user and a merchant. To illustrate, act 402 can involve receiving the request to initiate the payment transaction in connection with a purchase order for a product or service provided by the merchant via a merchant-specific website or application.

Act 402 can involve receiving, from the user client-device 104, an application program interface call via an application interface comprising content associated with the merchant. To illustrate, act 402 can involve receiving, from the user client-device 104, a JavaScript request via an application interface comprising content associated with the merchant. For example, act 402 can involve receiving a JavaScript request comprising instructions to obtain a payment token for a payment authorization number associated with the user and to send the payment token to the user client-device 104. The JavaScript request can include payment information including a user identifier, a merchant identifier, and a payment authorization number for the payment transaction.

The method 400 further includes an act 404 of identifying a payment authorization number. For example, act 404 involves identifying a payment authorization number associated with a user account for the user. Act 404 can involve identifying a request to use the payment authorization number in the request to initiate the payment transaction. For example, act 404 can involve identifying the payment authorization number from a JavaScript request from the user client-device 104. Additionally, the user account can be a social networking account comprising the payment authorization number for a payment credential of the user.

As part of act 404, or as an additional act, the method 400 includes identifying user information associated with the payment authorization number, and sending, to the user client-device 104, the user information with the encrypted payment token. For example, identifying user information can involve identifying billing information associated with the payment authorization number. The billing information can include a name of the user, a billing address for the user, and a phone number of the user.

The method 400 also includes an act 406 of obtaining a payment token for the payment authorization number. For example, act 406 involves obtaining a payment token representing the payment authorization number corresponding to the payment transaction. Act 406 can involve identifying the payment authorization number in connection with a payment credential of the user, sending, to a payment network 112 associated with the payment credential of the user, a request for the payment token representing the payment authorization number, and receiving, from the payment network 112, the payment token representing the payment authorization number. For example, the payment token can be a gateway payment token from a payment gateway system 114 in the payment network 112. Alternatively, the payment token can be a network payment token from a card network system 118 in the payment network 112.

Additionally, the method 400 includes an act 408 of encrypting the payment token. For example, act 408 can involve encrypting, by the one or more servers, the payment token representing the payment authorization number. Act 408 can involve encrypting the payment token to initiate the payment transaction between the user and the merchant irrespective of an operating system of the user client-device 104. Act 408 can also involve encrypting the payment token according to a format of the payment authorization number. For example, encrypting the payment token according to the format of the payment authorization number can include encrypting the payment token to have a set number of numerical values according to a numbering scheme associated with the payment authorization number.

Additionally, act 408 can involve encrypting the payment token with a key associated with the user client-device 104 for decrypting the payment token at the user client-device. For example, the encryption key can be a key to which only the one or more servers and the user client-device 104 have access. Act 408 can further involve signing the payment token with a private key associated with the one or more servers for the user client-device 104.

As part of act 408, or as an additional act, the method 400 can include generating a payment message comprising the encrypted payment token and the user information, and sending the payment message for autocompleting a payment form in the application comprising content associated with the merchant. For example, the payment message can include the encrypted payment token and the user information in a format that the user client-device 104 can interpret for autocompleting the payment form. Additionally, the payment form can be a payment form generated by the merchant for displaying within the application interface.

The method 400 also includes an act 410 of sending the encrypted payment token for the user client-device to provide to the merchant system. For example, act 410 involves sending, the encrypted payment token for the user client-device 104 to provide to a merchant system associated with the merchant in connection with the payment transaction. Act 410 can also involve sending encrypted user information with the encrypted payment token for the user client-device 104 to verify in connection with the encrypted payment token.

As part of act 410, or as an additional act, the method 400 can also include processing the payment transaction without the one or more servers receiving the payment token from the merchant after sending the encrypted payment token to the user client-device 104. For example, the method 400 can include configuring a data package comprising the encrypted payment token for the user client-device 104 to send to the merchant, and for the merchant to send to the payment network 112 to process the payment transaction without the one or more servers communicating with the merchant during the payment transaction.

FIG. 5 illustrates a schematic diagram illustrating additional details of the environment of FIG. 1 that includes the payment system 110. As shown, the environment 100 can include a user client-device 104, a merchant system 106, server device(s) 108 including the payment system 110, and a payment network 112. Additionally, the payment network 112 includes the payment gateway system 114, the card network system 118 associated with the payment authorization number, and the issuer 120 as described above in relation to FIG. 1. In general, the payment system 110 allows a user associated with the user client-device 104 to send a payment to a merchant associated with the merchant system 106.

FIG. 5 illustrates that the user client-device 104 includes a client application 502 (an e-client application or a web browser) with various components, and the server device(s) 108 include a network application 504 and the payment system 110 with various components. The components of the client application 502, the network application 504, and the payment system 110 can work together to allow a user to send payments to a merchant, as described in greater detail below.

The client application 502 of FIG. 5 includes a user interface manager 508, a user input detector 510, a message handler 512, a security manager 514, a location detector 516, a payment request generator 518, and a data manager 520. FIG. 5 illustrates that the network application 504 includes a communication manager 530, a message database 534, a user profile database 536, and a risk calculator 538. As described below, the network application 504 can also optionally include a social graph 550, which includes node information 552 and edge information 554. FIG. 5 further illustrates that the payment system 110 includes a payment manager 540, a transaction database 542, and a token manager 546. Each of the components of the user client-device 104, the merchant system 106, and the server device(s) 108 can communicate with each other or with components using any suitable communication technologies. It will be recognized that although the components of the client devices 104 and the payment system 110 are shown to be separate in FIG. 5, any of the components may be combined into fewer components, such as into a single facility or module, or divided into more components as may serve a particular embodiment. While FIG. 5 describes certain components as part of the client application 502 and other components as part of the network application 504 or payment system 110, the present disclosure is not so limited. In alternative embodiments, one or more of the components shown as part of the client application 502 can be part of the network application 504 or payment system 110, or vice versa. Similarly, one or more components shown as part of the network application 504 can be part of the payment system 110 or vice versa.

The components can include software, hardware, or both. For example, the components can include computer instructions stored on a non-transitory computer-readable storage medium and executable by at least one processor of the client devices or the server device(s). When executed by the at least one processor, the computer-executable instructions can cause the client device(s) or the server device(s) to perform the methods and processes described herein. Alternatively, the components can include hardware, such as a special purpose processing device to perform a certain function or group of functions. Additionally or alternatively, the components can include a combination of computer-executable instructions and hardware.

In one or more embodiments, the client application 502 is a native application installed on the client device. For example, the client application 502 may be a mobile application that installs and runs on a mobile device, such as a smart phone or a tablet. In another example, the client application 502 can be a desktop application, widget, or other form of a native computer program. Alternatively, the client application 502 may be a remote application that the client device accesses. For example, the client application 502 may be a web application that is executed within a web browser of the client device.

As mentioned above, and as shown in FIG. 5, the client application 502 can include a user interface manager 508. The user interface manager 508 provides, manages, and/or controls a graphical user interface (or simply "user interface") that allows a user to view content associated with a merchant and/or enter into payment transactions with the merchant. For example, the user interface manager 508 can provide user interfaces for engaging in browsing and purchasing goods or services from merchants. The user interface manager 508 can also allow the user to communicate with the merchant based on communication capabilities provided by the client application 502 or interfaces within the client application 502.

More specifically, the user interface manager 508 may facilitate the display of a user interface (e.g., by way of a display device associated with the corresponding client device). For example, the user interface may be composed of a plurality of graphical components, objects, and/or elements that allow a user to compose, send and receive messages or payments. More particularly, the user interface manager 508 may direct the client device to display a group of graphical components, objects and/or elements that enable a user to view products associated with the merchant. Additionally, the user interface manager 508 can allow the user to communicate with the merchant via one or more communication media, such as by allowing the user to communicate with the merchant via email or instant messaging.

In addition, the user interface manager 508 may direct the client device to display a one or more graphical objects or elements that facilitate user input for purchasing products from a merchant. To illustrate, the user interface manager 508 may provide a user interface that allows a user to provide user input to the client application 502. For example the user interface manager 508 can provide one or more user interfaces that allow a user to browse content associated with a merchant.

The user interface manager 508 can facilitate the input of text or other data in connection with payment transactions. For example, the user interface manager 508 can provide a user interface that includes a keyboard. A user can interact with the keyboard using one or more touch gestures to select text to provide information for a payment transaction. For example, a user can use the keyboard to enter a user information or payment information associated with a payment credential to complete a purchase from a merchant. In addition to text, the user interface, including the keyboard interface, can facilitate the input of various other characters, symbols, icons, or other character information.

As further illustrated in FIG. 5, the client application 502 can include a user input detector 510. In one or more embodiments, the user input detector 510 can detect, receive, and/or facilitate user input in any suitable manner. In some examples, the user input detector 510 can detect one or more user interactions with respect to the user interface. As referred to herein, a "user interaction" means a single interaction, or combination of interactions, received from a user by way of one or more input devices.

For example, user input detector 510 can detect a user interaction from a keyboard, mouse, touch pad, touchscreen, and/or any other input device. In the event the client device includes a touchscreen, the user input detector 510 can detect one or more touch gestures (e.g., swipe gestures, tap gestures, pinch gestures, or reverse pinch gestures) from a user that forms a user interaction. In some examples, a user can provide the touch gestures in relation to and/or directed at one or more graphical objects or graphical elements of a user interface.

The user input detector 510 may additionally, or alternatively, receive data representative of a user interaction. For example, user input detector 510 may receive one or more user configurable parameters from a user, one or more user commands from the user, and/or any other suitable user input. The user input detector 510 may receive input data from one or more components of the client application 502, from the storage on the user client-device 104, or from one or more remote locations (e.g., the network application).

The client application 502 can perform one or more functions in response to the user input detector 510 detecting user input and/or receiving other data. Generally, a user can control, navigate within, and otherwise use the client application 502 by providing one or more user inputs that the user input detector 510 can detect. For example, in response to the user input detector 510 detecting user input, one or more components of the client application 502 allow a user to send a request to pay for a product offered by a merchant via the payment system 110. In addition, in response to the user input detector 510 detecting user input, one or more components of the client application 502 allow a user to navigate through one or more user interfaces to review received messages, contacts, transaction history, etc.

In one or more embodiments, in response to the user input detector 510 detecting one or more user inputs, the client application 502 can allow a user to enter into payment transactions with a merchant. For example, the user can interact with a payment element provided within a user interface. Upon detecting the user interaction with the payment element, the user input detector 510 can cause the user interface manager 508 to provide a user interface for initiating a payment transaction with the merchant. Therefore, in response to the user input detector 510 detecting one or more user inputs, the client application 502 can allow a user to initiate a payment transaction between the user and the merchant.

As further illustrated in FIG. 5, the client application 502 includes a message handler 512 that manages messages provided to or sent from the client application 502. As used herein, the term "message" includes any communication generated by a device to send information to another device. Thus, a message or payment message can include a request to enter into a payment transaction. For example, the message handler 512 can interact with the user interface manager 508 and the user input detector 510 to coordinate the sending and receiving of messages using the client application 502. The message handler 512 may direct the sending and receiving of messages to and from the network application over the course of an electronic messaging session among a plurality of participants. The message handler 512 may organize incoming and outgoing messages and direct the user interface manager 508 to display messages.

In one or more embodiments, the message handler 512 can facilitate receiving and sending data via the client application 502. In particular, message handler 512 can facilitate sending and receiving messages. For example, the message handler 512 can package content to be included in a message and format the message in any necessary form that is able to be sent through one or more communication channels and using an appropriate communication protocol, as described herein. To illustrate, the message handler 512 can send payment transaction information to the server device(s) at various stages of a payment transaction process. Likewise, the message handler 512 can process messages the client device receives from other users.

In addition, the message handler 512 can facilitate the sending of a payment associated with a payment transaction. In particular, FIG. 5 illustrates that the client application 502 can include a payment request generator 518 that can generate a payment request that the message handler 512 can send to the network application or the payment system 110 to initiate a payment process/transaction. For example, upon a sender selecting a payment element on a user interface, the payment request generator 518 can create a data package that includes payment information received from the user. A payment request can include an indication of an amount of money to be sent as part of the payment transaction as well as any necessary information to allow the network application and payment system 110 to perform a payment transaction.

In one or more embodiments, the payment request generator 518 can create a data package that includes the payment amount, one or more user identifiers, one or more merchant identifiers, one or more payment methods or sender account information (e.g., the payment authorization number), authorization information, currency information, a message or payment description, and/or any other data that may be helpful to facilitating a payment form the sender to the recipient. The payment request generator 518 can determine the information to provide in the data package based on the instructions in a JavaScript call in an interface provided by the merchant system 106. The payment request generator 518 can pass the payment request (e.g., the data package that includes the payment information) to the message handler 512 to send to the payment system 110.

The payment request generator 518 can also obtain payment information from various sources. For example, the payment request generator 518 can obtain payment information directly from the sender via the user input detector 510. Additionally, or alternatively, the payment request generator 518 can gain access to payment information maintained on the client device by the data manager 520. For example, the client application 502 can allow a user to input and save various payment methods and/or identify a default payment method, default currency, and otherwise specify other user preferences related to sending and/or receiving a payment.

The payment request generator 518 may also facilitate formatting of messages based on input from the user via the client application 502. Specifically, the payment request generator 518 can facilitate formatting payment requests according to the corresponding payment method. For example, the payment request generator 518 can determine that a user has input a request to pay a merchant in a payment transaction (e.g., a credit transaction or debit transaction) and format the payment request to the merchant accordingly.

In one or more embodiments, the payment request generator 518 can access and provide a token within a payment request. The token can be a token from the server device(s) 108 to reference a payment credential stored by the payment system 110. For example, the payment request generator 518 can retrieve a token to include in, or with, the payment request that verifies the sender and/or sender client device as authorized to make the payment using a payment credential stored by the payment system 110. Alternatively, the token can reference a payment token stored at the server device(s) 108.

As mentioned above, the client application 502 can further include a security manager 514. The security manager 514 can encrypt or decrypt information in connection with secure payment transactions. Specifically, the security manager 514 can access security keys associated with the payment system 110 to encrypt or decrypt information (e.g., payment tokens, payment information) associated with a payment transaction. For example, the security manager 514 can receive encrypted data packages from the payment system 110 and decrypt the data packages to allow the user to verify the information in the data packages, such as a payment token and user information associated with a payment credential.

The client application 502 can further include a location detector 516. The location detector 516 can access or identify a location of the client device based on GPS information from the client device, cell tower triangulation, WIFI received signal strength indication, WIFI wireless fingerprinting, radio-frequency identification, near-field communication, by analyzing messages, or based on data from other sources. The location detector 516 can then provide the location of the client device to the network application 504 or the payment system 110.

As discussed above, the client device can include a data manager 520, as illustrated in FIG. 5. The data manager 520 can maintain message data representative of data used in connection with engaging in payment transactions with merchants. For example, message data can include payment transaction logs, purchase histories, content, past communications, and other similar types of data that the client application 502 can use in connection with providing the ability for users to enter into payment transactions with merchants using the client application 502.

The data manager 520 may also maintain payment data representative of information used to generate payment requests. For example, payment data may include a payment method data (i.e., a credential) and/or account data (e.g., bank or credit card account data). Furthermore, payment data can include payment preferences (e.g., a default payment method). In general, payment data can include any data that the payment request generator 518 can use in connection with generating a payment.

As briefly mentioned above, the environment 100 can further include a network application 504 that is implemented in whole or in part on the server device(s) 108. In one or more embodiments of the present disclosure, the network application 504 comprises a social-networking system (such as but not limited to FACEBOOK (TM)), but in other embodiments the network application 504 may comprise another type of application, including but not limited to an e-mail application, search engine application, banking application, or any number of other application types that utilizes user accounts.

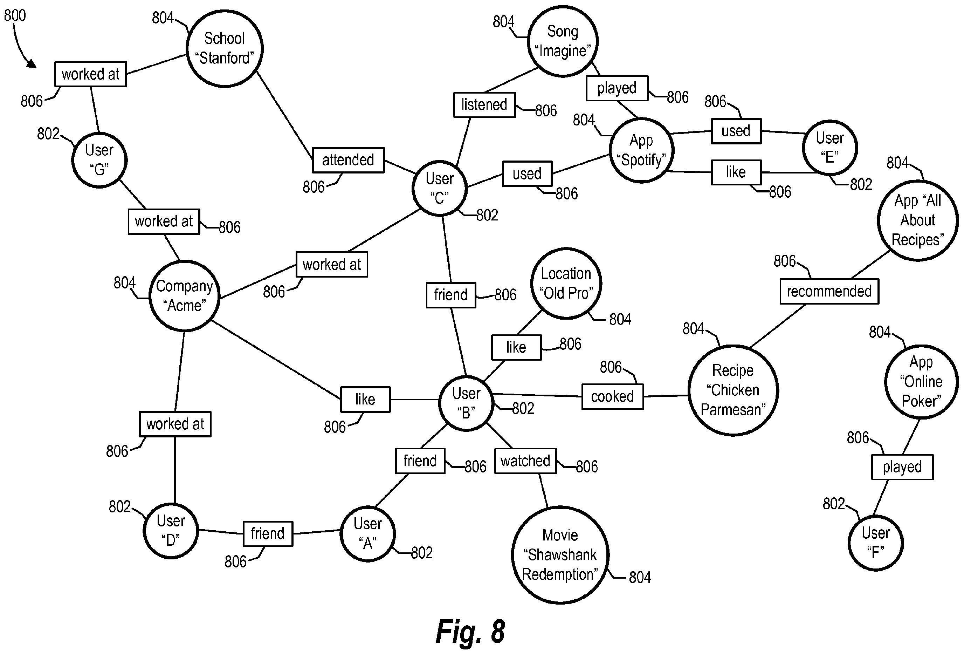

In one or more embodiments where the network application 504 comprises a social-networking system, the network application may include a social graph 550 for representing and analyzing a plurality of users and concepts. Node storage of the social graph 550 can store node information 552 comprising nodes for users, nodes for concepts, nodes for transactions, and nodes for items. Edge storage of the social graph can store edge information 554 comprising relationships between nodes and/or actions occurring within the social-networking system. Further detail regarding social-networking systems, social graphs, edges, and nodes is presented below with respect to FIG. 8.

The communication manager 530 can process messages received from client application 502. For example, the communication manager 530 can interact with a message handler 512 of a client application 502. The communication manager 530 can receive and manage payment requests from users. The communication manager 530 may receive a payment request from the client application 502, detect payment information associated with the payment request, and pass the information to the payment system 110.

The network application may also include a message database 534. The message database 534 can maintain message data associated with payment transactions related to identities of users or merchants engaging in payment transactions. Specifically, the message database 534 can maintain a history of a user's engagements with one or more merchants for use in identifying a user's interests or preferences. For example, the message database 534 can maintain information representative of the user's interests based on the types of merchants from which the user purchases products, which the social graph 550 can access to influence the node information 552 or edge information 554 for the user. The message database 534 can also redact sensitive information (e.g., payment information) that the payment system 110 maintains separately from the network application 504. Additionally, or alternatively, such information can be maintained in the transaction database 542, as described below.

As mentioned previously, the server device(s) can include a payment system 110 having a payment manager 540. The payment manager 540 of FIG. 5 can integrate the sending and receiving of payment requests and initiate payment transactions, and may employ one or more application programming interfaces (APIs). For example, upon the communication manager 530 receiving a payment request, the communication manager 530 can send any payment details to the payment manager 540. The payment manager 540 can then use the payment details retrieved from the payment request to initiate a payment transaction using the payment network 112.

According to one or more embodiments, the server device(s) 108 can maintain the payment system 110 separate from the network application 504. For example, the server device(s) 108 can implement payment processes associated with the payment system 110 separately from at least some of the functionality of the network application (e.g., using a messaging database for recovery). To illustrate, the server device(s) 108 can implement the functionality of the payment system 110 on a first group of one or more servers and the functionality of the network application 504 on a second group of one or more servers. Implementing functionality of the payment system 110 and the network application 504 on separate servers can allow the payment system to ensure that at least some of the financial information associated with the users is maintained apart from the network application 504 to comply with Payment Card Industry (PCI) standards. Alternative configurations of servers and/or software than those described herein may also allow the server device(s) 108 to comply with PCI standards.

The payment manager 540 can coordinate a transaction corresponding to a payment defined in a payment request. As generally explained above, the payment manager 540 can coordinate a transaction via the payment network 112 that corresponds to a payment request, monitor the status of the transaction, and provide status information regarding the transaction. More specifically, the payment network 112 can authorize a transaction, fund a transaction, and/or settle an individual transaction or batch of transactions. In one or more embodiments, the payment manager 540 can use one or more application programming interfaces (API) to communicate relevant information with the payment network 112.

In additional or alternative embodiments, the client application 502 on the user client-device 104 can cause the user client-device 104 to send a payment request to the network application 504 and the payment system 110 in parallel. In particular, when the client application 502 receives a selection by the user to pay an amount to the merchant, the client application 502 can cause the user client-device 104 to send a payment request to the network application 504 and to the payment system 110. Thus, the network application 504 can process the payment request while the payment system 110 is also processing the payment transaction associated with the payment request. In alternative embodiments, the user client-device 104 can send messages to one or more servers associated with the network application 504, which can then forward the messages to the payment system 110, or vice versa.

To complete a transaction, the payment manager 540 can access or obtain payment credentials for the user. Specifically, the payment manager 540 identifies a payment credential (e.g., a payment authorization number or a payment token) for the user in connection with a payment account of the user. The payment manager 540 can register one or more payment accounts or other payment credentials for the user with the network application 504. In additional embodiments, the payment system 110 is also capable of handling payment transactions directly with merchant systems that integrate with the payment system 110. Thus, the payment system 110 can also manage payment transactions directly with those merchant systems.

Upon the user registering a deposit account or other payment credential, the user profile database 536 can maintain the payment credential or user information associated with the payment credential for the user. As mentioned, the user profile database 536 stores user profile information for users. In one or more embodiments, user profile information includes payment credentials (i.e., a payment token representing a payment authorization number, as described previously) for a credit card, a debit card, a deposit account or other bank accounts, gift card accounts, store credit accounts, etc. The user profile database 536 can also store additional information associated with the payment credentials, such as expiration dates, security codes, address information, and/or other information. User profile information can also include one or more default payment method for payment transactions for one or more merchants or co-users. The user profile information can also include identifying information for the user, such as name, address, etc. to allow the payment manager 540 to provide information to the user client-device 104 in connection with a payment transaction.

In one or more additional embodiments, the payment manager 540 can communicate with the risk calculator 538 to determine a risk associated with a sender, a recipient, and/or a particular payment transaction. Specifically, the risk calculator 538 can determine whether the sender/recipient is a fraudster based on information associated with the sender/recipient in order to prevent fraudulent payment transactions. For example, the risk calculator 538 can determine the likelihood of fraudulent activity based on activity or information associated with the sender/recipient in connection with the network application. Determining a risk associated with users involved in payment transactions can also be useful in determining whether to process a particular payment transaction.

For example, in one or more embodiments, the network application can determine whether a risk associated with a particular user satisfies a predetermined threshold. In particular, the network application can determine whether a user is a fraudster (e.g., a scam account or software posing as a real person) based on a "realness" score. For example, if the risk associated with the sender is below a predetermined threshold (i.e., a high risk level), the network application can determine that the user is likely a fraudster and notify the payment system 110 that the user is a fraudster. If the user has a high-risk level, the payment system 110 can stop a payment transaction between the user and the merchant.

In additional embodiments, after determining a risk associated with a user, the network application 504 can perform one or more actions in association with the risk. Specifically, the network application 504 can perform an action that allows the network application 504 to verify the identity of the user. For example, the network application 504 can identify information associated with the user that indicates the user is who the user purports to be. To illustrate, the network application 504 can access the user's purchase history or other stored information in the message database 534 or user profile database 536, which can influence the risk level or realness score of the user.

In additional or alternative embodiments, the network application 504 can automatically perform one or more actions with respect to the payment request or a payment transaction in response to determining a risk level of the user. Specifically, the network application 504 can perform an action that affects the payment request or a corresponding payment transaction between the user and the merchant without requesting additional information from the user. For example, the network application 504 can allow the payment transaction (e.g., by obtaining and sending the payment token to the user client-device 104) or block the payment transaction (e.g., by refusing to send the payment token to the user client-device 104), or disable the user's account with the network application 504.

In any event, upon receipt of a payment request from a user, the payment manager 540 can detect the user (or group) ID of the user and retrieve the payment profile for that user (or entity). The payment manager 540 can then obtain a payment token that represents a payment authorization number associated with the user's payment account. Specifically, the payment manager 540 can communicate with the payment network 112 to obtain a payment token in response to sending a payment authorization number to the payment network 112. After receiving the payment token, the payment manager 540 may send the payment token to the user client-device 104 as part of the payment transaction.

The payment manager 540 can perform various other additional steps and methods in order to effectively manage the payment process. In one or more embodiments, for example, upon receiving a payment request the payment manager 540 can generate a transaction identifier (or simply "transaction ID") and associate the transaction identifier with the payment request and/or the payment information within the payment request. For instance, upon generating a transaction ID, the payment manager 540 can send the transaction ID and the payment information to the transaction database 542. The transaction database 542 can include a data table or similar data matrix that stores transaction information according to transaction ID.

The transaction database 542 of FIG. 5 can provide storage for each transaction (such as in the form of a graph object), attempted or completed, the transaction ID, a date, an amount of the transaction, the payment method used, and any other information gathered on the transaction. The transaction database 542 can also store transaction information, such as requests associated with a user and the terms for a particular transaction. With this information, the payment manager 540 can provide, upon request, a summary of one or more transactions to users as a history of payments requested, payments declined and payments completed.

In one or more embodiments, after a transaction ID is associated with a particular payment request, the transaction ID can be included or embedded within substantially all communications within the payment system relating to the particular payment. As such, the transaction ID allows the payment manager 540 to manage and process a large number of payments in an organized fashion. For example, the payment manager 540 can include instructions to include the transaction ID in any information sent to client devices. In return, the message handlers 512 can also include the transaction ID in any information sent from client devices to allow the payment manager 540 to efficiently and reliably identify a particular transaction to which the information corresponds.

In one or more embodiments, the transaction ID can be associated with one or more user identifiers, merchant identifiers, payment amounts, payment methods (e.g., user accounts), deposit methods (e.g., merchant accounts), transaction history, current transaction status, as well as other transaction information. In one or more embodiments, the transaction database 542 maintains the transaction information in the form of one or more graph objects that are updated with any updates or actions with respect to a transaction.

As mentioned, the payment system 110 can also include a token manager 546. The token manager 546 can manage payment tokens associated with users of the payment system. For example, after the payment manager 540 requests and obtains a payment token from a payment network 112 for a user's payment authorization number, the token manager 546 can associate the payment token with the user's user account. The token manager 546 can associate the network payment token with the user profile of the user by storing information linking the payment token to the user profile of the user, for example, at the user profile database 536.

The token manager 546 can communicate with the payment manager 540 and the user profile database 536 when the payment manager 540 receives a new payment request. Specifically, the token manager 546 identifies the network payment token for a user that sends the payment request based on payment information that identifies a user profile of the user. The token manager 546 can also identify other tokens associated with the user, such as any security/authentication tokens that allow the user to initiate payment transactions, as may serve various embodiments.

The token manager 546 can also manage the encryption of payment tokens in connection with payment transactions. In particular, providing a payment token and user information to a user client-device for the user client-device to pass on to a merchant system for a payment transaction can include encrypting the payment token and user information. For example, the token manager 546 can encrypt the payment token and user information in a data package to send to the user client-device using an encryption key. In one or more embodiments, the token manager 546 uses an encryption key to which only the payment system 110 and the user client-device 104 have access. Alternatively, the token manager 546 can use an encryption key to which the merchant system 106 has access. The token manager 546 can encrypt the data package according to PCI standards in a way that allows the user client-device 104 to pass the data package to the merchant system 106 without the merchant system 106 gaining access to the payment authorization number.

Embodiments of the present disclosure may comprise or utilize a special purpose or general-purpose computer including computer hardware, such as, for example, one or more processors and system memory, as discussed in greater detail below. Embodiments within the scope of the present disclosure also include physical and other computer-readable media for carrying or storing computer-executable instructions and/or data structures. In particular, one or more of the processes described herein may be implemented at least in part as instructions embodied in a non-transitory computer-readable medium and executable by one or more computing devices (e.g., any of the media content access devices described herein). In general, a processor (e.g., a microprocessor) receives instructions, from a non-transitory computer-readable medium, (e.g., a memory, etc.), and executes those instructions, thereby performing one or more processes, including one or more of the processes described herein.

Computer-readable media can be any available media that can be accessed by a general purpose or special purpose computer system. Computer-readable media that store computer-executable instructions are non-transitory computer-readable storage media (devices). Computer-readable media that carry computer-executable instructions are transmission media. Thus, by way of example, and not limitation, embodiments of the disclosure can comprise at least two distinctly different kinds of computer-readable media: non-transitory computer-readable storage media (devices) and transmission media.

Non-transitory computer-readable storage media (devices) includes RAM, ROM, EEPROM, CD-ROM, solid state drives ("SSDs") (e.g., based on RAM), Flash memory, phase-change memory ("PCM"), other types of memory, other optical disk storage, magnetic disk storage or other magnetic storage devices, or any other medium which can be used to store desired program code means in the form of computer-executable instructions or data structures and which can be accessed by a general purpose or special purpose computer.

A "network" is defined as one or more data links that enable the transport of electronic data between computer systems and/or modules and/or other electronic devices. When information is transferred or provided over a network or another communications connection (either hardwired, wireless, or a combination of hardwired or wireless) to a computer, the computer properly views the connection as a transmission medium. Transmissions media can include a network and/or data links which can be used to carry desired program code means in the form of computer-executable instructions or data structures and which can be accessed by a general purpose or special purpose computer. Combinations of the above should also be included within the scope of computer-readable media.

Further, upon reaching various computer system components, program code means in the form of computer-executable instructions or data structures can be transferred automatically from transmission media to non-transitory computer-readable storage media (devices) (or vice versa). For example, computer-executable instructions or data structures received over a network or data link can be buffered in RAM within a network interface module (e.g., a "NIC"), and then eventually transferred to computer system RAM and/or to less volatile computer storage media (devices) at a computer system. Thus, it should be understood that non-transitory computer-readable storage media (devices) can be included in computer system components that also (or even primarily) utilize transmission media.

Computer-executable instructions comprise, for example, instructions and data which, when executed at a processor, cause a general purpose computer, special purpose computer, or special purpose processing device to perform a certain function or group of functions. In one or more embodiments, computer-executable instructions are executed on a general-purpose computer to turn the general-purpose computer into a special purpose computer implementing elements of the disclosure. The computer executable instructions may be, for example, binaries, intermediate format instructions such as assembly language, or even source code. Although the subject matter has been described in language specific to structural features and/or methodological acts, it is to be understood that the subject matter defined in the appended claims is not necessarily limited to the described features or acts described above. Rather, the described features and acts are disclosed as example forms of implementing the claims.

Those skilled in the art will appreciate that the disclosure may be practiced in network computing environments with many types of computer system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, tablets, pagers, routers, switches, and the like. The disclosure may also be practiced in distributed system environments where local and remote computer systems, which are linked (either by hardwired data links, wireless data links, or by a combination of hardwired and wireless data links) through a network, both perform tasks. In a distributed system environment, program modules may be located in both local and remote memory storage devices.

Embodiments of the present disclosure can also be implemented in cloud computing environments. In this description, "cloud computing" is defined as a model for enabling on-demand network access to a shared pool of configurable computing resources. For example, cloud computing can be employed in the marketplace to offer ubiquitous and convenient on-demand access to the shared pool of configurable computing resources. The shared pool of configurable computing resources can be rapidly provisioned via virtualization and released with low management effort or service provider interaction, and then scaled accordingly.

A cloud-computing model can be composed of various characteristics such as, for example, on-demand self-service, broad network access, resource pooling, rapid elasticity, measured service, and so forth. A cloud-computing model can also expose various service models, such as, for example, Software as a Service ("SaaS"), Platform as a Service ("PaaS"), and Infrastructure as a Service ("IaaS"). A cloud-computing model can also be deployed using different deployment models such as private cloud, community cloud, public cloud, hybrid cloud, and so forth. In this description and in the claims, a "cloud-computing environment" is an environment in which cloud computing is employed.

FIG. 6 illustrates a block diagram of exemplary computing device 600 that may be configured to perform one or more of the processes described above. One will appreciate that one or more computing devices such as the computing device 600 may implement the payment system 110. As shown by FIG. 6, the computing device 600 can comprise a processor 602, a memory 604, a storage device 606, an I/O interface 608, and a communication interface 610, which may be communicatively coupled by way of a communication infrastructure 612. While an exemplary computing device 600 is shown in FIG. 6, the components illustrated in FIG. 6 are not intended to be limiting. Additional or alternative components may be used in other embodiments. Furthermore, in certain embodiments, the computing device 600 can include fewer components than those shown in FIG. 6. Components of the computing device 600 shown in FIG. 6 will now be described in additional detail.

In one or more embodiments, the processor 602 includes hardware for executing instructions, such as those making up a computer program. As an example and not by way of limitation, to execute instructions, the processor 602 may retrieve (or fetch) the instructions from an internal register, an internal cache, the memory 604, or the storage device 606 and decode and execute them. In one or more embodiments, the processor 602 may include one or more internal caches for data, instructions, or addresses. As an example and not by way of limitation, the processor 602 may include one or more instruction caches, one or more data caches, and one or more translation lookaside buffers (TLBs). Instructions in the instruction caches may be copies of instructions in the memory 604 or the storage device 606.

The memory 604 may be used for storing data, metadata, and programs for execution by the processor(s). The memory 604 may include one or more of volatile and non-volatile memories, such as Random Access Memory ("RAM"), Read Only Memory ("ROM"), a solid state disk ("SSD"), Flash, Phase Change Memory ("PCM"), or other types of data storage. The memory 604 may be internal or distributed memory.

The storage device 606 includes storage for storing data or instructions. As an example and not by way of limitation, storage device 606 can comprise a non-transitory storage medium described above. The storage device 606 may include a hard disk drive (HDD), a floppy disk drive, flash memory, an optical disc, a magneto-optical disc, magnetic tape, or a Universal Serial Bus (USB) drive or a combination of two or more of these. The storage device 606 may include removable or non-removable (or fixed) media, where appropriate. The storage device 606 may be internal or external to the computing device 600. In one or more embodiments, the storage device 606 is non-volatile, solid-state memory. In other embodiments, the storage device 606 includes read-only memory (ROM). Where appropriate, this ROM may be mask programmed ROM, programmable ROM (PROM), erasable PROM (EPROM), electrically erasable PROM (EEPROM), electrically alterable ROM (EAROM), or flash memory or a combination of two or more of these.

The I/O interface 608 allows a user to provide input to, receive output from, and otherwise transfer data to and receive data from computing device 600. The I/O interface 608 may include a mouse, a keypad or a keyboard, a touchscreen, a camera, an optical scanner, network interface, modem, other known I/O devices or a combination of such I/O interfaces. The I/O interface 608 may include one or more devices for presenting output to a user, including, but not limited to, a graphics engine, a display (e.g., a display screen), one or more output drivers (e.g., display drivers), one or more audio speakers, and one or more audio drivers. In certain embodiments, the I/O interface 608 is configured to provide graphical data to a display for presentation to a user. The graphical data may be representative of one or more graphical user interfaces and/or any other graphical content as may serve a particular implementation.

The communication interface 610 can include hardware, software, or both. In any event, the communication interface 610 can provide one or more interfaces for communication (such as, for example, packet-based communication) between the computing device 600 and one or more other computing devices or networks. As an example and not by way of limitation, the communication interface 610 may include a network interface controller (NIC) or network adapter for communicating with an Ethernet or other wire-based network or a wireless NIC (WNIC) or wireless adapter for communicating with a wireless network, such as a WI-FI.

Additionally or alternatively, the communication interface 610 may facilitate communications with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, the communication interface 610 may facilitate communications with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination thereof.

Additionally, the communication interface 610 may facilitate communications various communication protocols. Examples of communication protocols that may be used include, but are not limited to, data transmission media, communications devices, Transmission Control Protocol ("TCP"), Internet Protocol ("IP"), File Transfer Protocol ("FTP"), Telnet, Hypertext Transfer Protocol ("HTTP"), Hypertext Transfer Protocol Secure ("HTTPS"), Session Initiation Protocol ("SIP"), Simple Object Access Protocol ("SOAP"), Extensible Mark-up Language ("XML") and variations thereof, Simple Mail Transfer Protocol ("SMTP"), Real-Time Transport Protocol ("RTP"), User Datagram Protocol ("UDP"), Global System for Mobile Communications ("GSM") technologies, Code Division Multiple Access ("CDMA") technologies, Time Division Multiple Access ("TDMA") technologies, Short Message Service ("SMS"), Multimedia Message Service ("MMS"), radio frequency ("RF") signaling technologies, Long Term Evolution ("LTE") technologies, wireless communication technologies, in-band and out-of-band signaling technologies, and other suitable communications networks and technologies.

The communication infrastructure 612 may include hardware, software, or both that couples components of the computing device 600 to each other. As an example and not by way of limitation, the communication infrastructure 612 may include an Accelerated Graphics Port (AGP) or other graphics bus, an Enhanced Industry Standard Architecture (EISA) bus, a frontside bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination thereof.

As mentioned above, the payment system 110 can comprise a social-networking system. A social-networking system may enable its users (such as persons or organizations) to interact with the system and with each other. The social-networking system may, with input from a user, create and store in the social-networking system a user profile associated with the user. The user profile may include demographic information, communication-channel information, and information on personal interests of the user. The social-networking system may also, with input from a user, create and store a record of relationships of the user with other users of the social-networking system, as well as provide services (e.g. wall posts, photo-sharing, on-line calendars and event organization, messaging, games, or advertisements) to facilitate social interaction between or among users. Also, the social-networking system may allow users to post photographs and other multimedia content items to a user's profile page (typically known as "wall posts" or "timeline posts") or in a photo album, both of which may be accessible to other users of the social-networking system depending upon the user's configured privacy settings.

FIG. 7 illustrates an example network environment 700 of a social-networking system. Network environment 700 includes a client system 706, a social-networking system 702, and a third-party system 708 connected to each other by a network 704. Although FIG. 7 illustrates a particular arrangement of client system 706, social-networking system 702, third-party system 708, and network 704, this disclosure contemplates any suitable arrangement of client system 706, social-networking system 702, third-party system 708, and network 704. As an example and not by way of limitation, two or more of client system 706, social-networking system 702, and third-party system 708 may be connected to each other directly, bypassing network 704. As another example, two or more of client system 706, social-networking system 702, and third-party system 708 may be physically or logically co-located with each other in whole or in part. Moreover, although FIG. 7 illustrates a particular number of client systems 706, social-networking systems 702, third-party systems 708, and networks 704, this disclosure contemplates any suitable number of client systems 706, social-networking systems 702, third-party systems 708, and networks 704. As an example and not by way of limitation, network environment 700 may include multiple client system 706, social-networking systems 702, third-party systems 708, and networks 704.

This disclosure contemplates any suitable network 704. As an example and not by way of limitation, one or more portions of network 704 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. Network 704 may include one or more networks 704.

Links may connect client system 706, social-networking system 702, and third-party system 708 to communication network 704 or to each other. This disclosure contemplates any suitable links. In particular embodiments, one or more links include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In particular embodiments, one or more links each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link, or a combination of two or more such links. Links need not necessarily be the same throughout network environment 700. One or more first links may differ in one or more respects from one or more second links.

In particular embodiments, client system 706 may be an electronic device including hardware, software, or embedded logic components or a combination of two or more such components and capable of carrying out the appropriate functionalities implemented or supported by client system 706. As an example and not by way of limitation, a client system 706 may include any of the computing devices discussed above in relation to FIG. 7. A client system 706 may enable a network user at client system 706 to access network 704. A client system 706 may enable its user to communicate with other users at other client systems 706.

In particular embodiments, client system 706 may include a web browser 932, such as MICROSOFT INTERNET EXPLORER, GOOGLE CHROME or MOZILLA FIREFOX, and may have one or more add-ons, plug-ins, or other extensions, such as TOOLBAR or YAHOO TOOLBAR. A user at client system 706 may enter a Uniform Resource Locator (URL) or other address directing the web browser to a particular server (such as server, or a server associated with a third-party system 708), and the web browser may generate a Hyper Text Transfer Protocol (HTTP) request and communicate the HTTP request to server. The server may accept the HTTP request and communicate to client system 706 one or more Hyper Text Markup Language (HTML) files responsive to the HTTP request. Client system 706 may render a webpage based on the HTML files from the server for presentation to the user. This disclosure contemplates any suitable webpage files. As an example and not by way of limitation, webpages may render from HTML files, Extensible Hyper Text Markup Language (XHTML) files, or Extensible Markup Language (XML) files, according to particular needs. Such pages may also execute scripts such as, for example and without limitation, those written in JAVASCRIPT, JAVA, MICROSOFT SILVERLIGHT, combinations of markup language and scripts such as AJAX (Asynchronous JAVASCRIPT and XML), and the like. Herein, reference to a webpage encompasses one or more corresponding webpage files (which a browser may use to render the webpage) and vice versa, where appropriate.

In particular embodiments, social-networking system 702 may be a network-addressable computing system that can host an online social network. Social-networking system 702 may generate, store, receive, and send social-networking data, such as, for example, user-profile data, concept-profile data, social-graph information, or other suitable data related to the online social network. Social-networking system 702 may be accessed by the other components of network environment 700 either directly or via network 704. In particular embodiments, social-networking system 702 may include one or more servers. Each server may be a unitary server or a distributed server spanning multiple computers or multiple datacenters. Servers may be of various types, such as, for example and without limitation, web server, news server, mail server, message server, advertising server, file server, application server, exchange server, database server, proxy server, another server suitable for performing functions or processes described herein, or any combination thereof. In particular embodiments, each server may include hardware, software, or embedded logic components or a combination of two or more such components for carrying out the appropriate functionalities implemented or supported by server. In particular embodiments, social-networking system 702 may include one or more data stores. Data stores may be used to store various types of information. In particular embodiments, the information stored in data stores may be organized according to specific data structures. In particular embodiments, each data store may be a relational, columnar, correlation, or other suitable database. Although this disclosure describes or illustrates particular types of databases, this disclosure contemplates any suitable types of databases. Particular embodiments may provide interfac-es that enable a client system 706, a social-networking system 702, or a third-party system 708 to manage, retrieve, modify, add, or delete, the information stored in data store.

In particular embodiments, social-networking system 702 may store one or more social graphs in one or more data stores. In particular embodiments, a social graph may include multiple nodes-which may include multiple user nodes (each corresponding to a particular user) or multiple concept nodes (each corresponding to a particular concept)-and multiple edges connecting the nodes. Social-networking system 702 may provide users of the online social network the ability to communicate and interact with other users. In particular embodiments, users may join the online social network via social-networking system 702 and then add connections (e.g., relationships) to a number of other users of social-networking system 702 whom they want to be connected to. Herein, the term "friend" may refer to any other user of social-networking system 702 with whom a user has formed a connection, association, or relationship via social-networking system 702.

In particular embodiments, social-networking system 702 may provide users with the ability to take actions on various types of items or objects, supported by social-networking system 702. As an example and not by way of limitation, the items and objects may include groups or social networks to which users of social-networking system 702 may belong, events or calendar entries in which a user might be interested, computer-based applications that a user may use, transactions that allow users to buy or sell items via the service, interactions with advertisements that a user may perform, or other suitable items or objects. A user may interact with anything that is capable of being represented in social-networking system 702 or by an external system of third-party system 708, which is separate from social-networking system 702 and coupled to social-networking system 702 via a network 704.

In particular embodiments, social-networking system 702 may be capable of linking a variety of entities. As an example and not by way of limitation, social-networking system 702 may enable users to interact with each other as well as receive content from third-party systems 708 or other entities, or to allow users to interact with these entities through an application programming interfaces (API) or other communication channels.

In particular embodiments, a third-party system 708 may include one or more types of servers, one or more data stores, one or more interfaces, including but not limited to APIs, one or more web services, one or more content sources, one or more networks, or any other suitable components, e.g., that servers may communicate with. A third-party system 708 may be operated by a different entity from an entity operating the social-networking system 702. In particular embodiments, however, social-networking system 702 and third-party systems 708 may operate in conjunction with each other to provide social-networking services to users of social-networking system 702 or third-party systems 708. In this sense, social-networking system 702 may provide a platform, or backbone, which other systems, such as third-party systems 708, may use to provide social-networking services and functionality to users across the Internet.

In particular embodiments, a third-party system 708 may include a third-party content object provider. A third-party content object provider may include one or more sources of content objects, which may be communicated to a client system 706. As an example and not by way of limitation, content objects may include information regarding things or activities of interest to the user, such as, for example, movie show times, movie reviews, restaurant reviews, restaurant menus, product information and reviews, or other suitable information. As another example and not by way of limitation, content objects may include incentive content objects, such as coupons, discount tickets, gift certificates, or other suitable incentive objects.

In particular embodiments, social-networking system 702 also includes user-generated content objects, which may enhance a user's interactions with social-networking system 702. User-generated content may include anything a user can add, upload, send, or "post" to social-networking system 702. As an example and not by way of limitation, a user communicates posts to social-networking system 702 from a client system 706. Posts may include data such as status updates or other textual data, location information, photos, videos, links, music or other similar data or media. Content may also be added to social-networking system 702 by a third-party through a "communication channel," such as a newsfeed or stream.

In particular embodiments, social-networking system 702 may include a variety of servers, sub-systems, programs, modules, logs, and data stores. In particular embodiments, social-networking system 702 may include one or more of the following: a web server, action logger, API-request server, relevance-and-ranking engine, content-object classifier, notification controller, action log, third-party-content-object-exposure log, inference module, authorization/privacy server, search module, advertisement-targeting module, user-interface module, user-profile store, connection store, third-party content store, or location store. Social-networking system 702 may also include suitable components such as network interfaces, security mechanisms, load balancers, failover servers, management-and-network-operations consoles, other suitable components, or any suitable combination thereof. In particular embodiments, social-networking system 702 may include one or more user-profile stores for storing user profiles. A user profile may include, for example, biographic information, demographic information, behavioral information, social information, or other types of descriptive information, such as work experience, educational history, hobbies or preferences, interests, affinities, or location. Interest information may include interests related to one or more categories. Categories may be general or specific. As an example and not by way of limitation, if a user "likes" an article about a brand of shoes the category may be the brand, or the general category of "shoes" or "clothing." A connection store may be used for storing connection information about users. The connection information may indicate users who have similar or common work experience, group memberships, hobbies, educational history, or are in any way related or share common attributes. The connection information may also include user-defined connections between different users and content (both internal and external). A web server may be used for linking social-networking system 702 to one or more client systems 706 or one or more third-party system 708 via network 704. The web server may include a mail server or other messaging functionality for receiving and routing messages between social-networking system 702 and one or more client systems 706. An API-request server may allow a third-party system 708 to access information from social-networking system 702 by calling one or more APIs. An action logger may be used to receive communications from a web server about a user's actions on or off social-networking system 702. In conjunction with the action log, a third-party-content-object log may be maintained of user exposures to third-party-content objects. A notification controller may provide information regarding content objects to a client system 706. Information may be pushed to a client system 706 as notifications, or information may be pulled from client system 706 responsive to a request received from client system 706. Authorization servers may be used to enforce one or more privacy settings of the users of social-networking system 702. A privacy setting of a user determines how particular information associated with a user can be shared. The authorization server may allow users to opt in to or opt out of having their actions logged by social-networking system 702 or shared with other systems (e.g., third-party system 708), such as, for example, by setting appropriate privacy settings. Third-party-content-object stores may be used to store content objects received from third parties, such as a third-party system 708. Location stores may be used for storing location information received from client systems 706 associated with users. Advertisement-pricing modules may combine social information, the current time, location information, or other suitable information to provide relevant advertisements, in the form of notifications, to a user.

FIG. 8 illustrates example social graph 800. In particular embodiments, social-networking system 702 may store one or more social graphs 800 in one or more data stores. In particular embodiments, social graph 800 may include multiple nodes-which may include multiple user nodes 802 or multiple concept nodes 804-and multiple edges 806 connecting the nodes. Example social graph 800 illustrated in FIG. 8 is shown, for didactic purposes, in a two-dimensional visual map representation. In particular embodiments, a social-networking system 702, client system 706, or third-party system 708 may access social graph 800 and related social-graph information for suitable applications. The nodes and edges of social graph 800 may be stored as data objects, for example, in a data store (such as a social-graph database). Such a data store may include one or more searchable or query able indexes of nodes or edges of social graph 800.

In particular embodiments, a user node 802 may correspond to a user of social-networking system 702. As an example and not by way of limitation, a user may be an individual (human user), an entity (e.g., an enterprise, business, or third-party application), or a group (e.g., of individuals or entities) that interacts or communicates with or over social-networking system 702. In particular embodiments, when a user registers for an account with social-networking system 702, social-networking system 702 may create a user node 802 corresponding to the user, and store the user node 802 in one or more data stores. Users and user nodes 802 described herein may, where appropriate, refer to registered users and user nodes 802 associated with registered users. In addition or as an alternative, users and user nodes 802 described herein may, where appropriate, refer to users that have not registered with social-networking system 702. In particular embodiments, a user node 802 may be associated with information provided by a user or information gathered by various systems, including social-networking system 702. As an example and not by way of limitation, a user may provide his or her name, profile picture, contact information, birth date, sex, marital status, family status, employment, education background, preferences, interests, or other demographic information. Each user node of the social graph may have a corresponding web page (typically known as a profile page). In response to a request including a user name, the social-networking system can access a user node corresponding to the user name, and construct a profile page including the name, a profile picture, and other information associated with the user. A profile page of a first user may display to a second user all or a portion of the first user's information based on one or more privacy settings by the first user and the relationship between the first user and the second user.

In particular embodiments, a concept node 804 may correspond to a concept. As an example and not by way of limitation, a concept may correspond to a place (such as, for example, a movie theater, restaurant, landmark, or city); a website (such as, for example, a website associated with social-network system 702 or a third-party website associated with a web-application server); an entity (such as, for example, a person, business, group, sports team, or celebrity); a resource (such as, for example, an audio file, video file, digital photo, text file, structured document, or application) which may be located within social-networking system 702 or on an external server, such as a web-application server; real or intellectual property (such as, for example, a sculpture, painting, movie, game, song, idea, photograph, or written work); a game; an activity; an idea or theory; another suitable concept; or two or more such concepts. A concept node 804 may be associated with information of a concept provided by a user or information gathered by various systems, including social-networking system 702. As an example and not by way of limitation, information of a concept may include a name or a title; one or more images (e.g., an image of the cover page of a book); a location (e.g., an address or a geographical location); a website (which may be associated with a URL); contact information (e.g., a phone number or an email address); other suitable concept information; or any suitable combination of such information. In particular embodiments, a concept node 804 may be associated with one or more data objects corresponding to information associated with concept node 804. In particular embodiments, a concept node 804 may correspond to one or more webpages.

In particular embodiments, a node in social graph 800 may represent or be represented by a webpage (which may be referred to as a "profile page"). Profile pages may be hosted by or accessible to social-networking system 702. Profile pages may also be hosted on third-party websites associated with a third-party server 708. As an example and not by way of limitation, a profile page corresponding to a particular external webpage may be the particular external webpage and the profile page may correspond to a particular concept node 804. Profile pages may be viewable by all or a selected subset of other users. As an example and not by way of limitation, a user node 802 may have a corresponding user-profile page in which the corresponding user may add content, make declarations, or otherwise express himself or herself. As another example and not by way of limitation, a concept node 804 may have a corresponding concept-profile page in which one or more users may add content, make declarations, or express themselves, particularly in relation to the concept corresponding to concept node 804.

In particular embodiments, a concept node 804 may represent a third-party webpage or resource hosted by a third-party system 708. The third-party webpage or resource may include, among other elements, content, a selectable or other icon, or other inter-actable object (which may be implemented, for example, in JavaScript, AJAX, or PHP codes) representing an action or activity. As an example and not by way of limitation, a third-party webpage may include a selectable icon such as "like," "check in," "eat," "recommend," or another suitable action or activity. A user viewing the third-party webpage may perform an action by selecting one of the icons (e.g., "eat"), causing a client system 706 to send to social-networking system 702 a message indicating the user's action. In response to the message, social-networking system 702 may create an edge (e.g., an "eat" edge) between a user node 802 corresponding to the user and a concept node 804 corresponding to the third-party webpage or resource and store edge 806 in one or more data stores.

In particular embodiments, a pair of nodes in social graph 800 may be connected to each other by one or more edges 806. An edge 806 connecting a pair of nodes may represent a relationship between the pair of nodes. In particular embodiments, an edge 806 may include or represent one or more data objects or attributes corresponding to the relationship between a pair of nodes. As an example and not by way of limitation, a first user may indicate that a second user is a "friend" of the first user. In response to this indication, social-networking system 702 may send a "friend request" to the second user. If the second user confirms the "friend request," social-networking system 702 may create an edge 806 connecting the first user's user node 802 to the second user's user node 802 in social graph 800 and store edge 806 as social-graph information in one or more of data stores. In the example of FIG. 8, social graph 800 includes an edge 806 indicating a friend relation between user nodes 802 of user "A" and user "B" and an edge indicating a friend relation between user nodes 802 of user "C" and user "B." Although this disclosure describes or illustrates particular edges 806 with particular attributes connecting particular user nodes 802, this disclosure contemplates any suitable edges 806 with any suitable attributes connecting user nodes 802. As an example and not by way of limitation, an edge 806 may represent a friendship, family relationship, business or employment relationship, fan relationship, follower relationship, visitor relationship, subscriber relationship, superior/subordinate relationship, reciprocal relationship, non-reciprocal relationship, another suitable type of relationship, or two or more such relationships. Moreover, although this disclosure generally describes nodes as being connected, this disclosure also describes users or concepts as being connected. Herein, references to users or concepts being connected may, where appropriate, refer to the nodes corresponding to those users or concepts being connected in social graph 800 by one or more edges 806.

In particular embodiments, an edge 806 between a user node 802 and a concept node 804 may represent a particular action or activity performed by a user associated with user node 802 toward a concept associated with a concept node 804. As an example and not by way of limitation, as illustrated in FIG. 8, a user may "like," "attended," "played," "listened," "cooked," "worked at," or "watched" a concept, each of which may correspond to a edge type or subtype. A concept-profile page corresponding to a concept node 804 may include, for example, a selectable "check in" icon (such as, for example, a clickable "check in" icon) or a selectable "add to favorites" icon. Similarly, after a user clicks these icons, social-networking system 702 may create a "favorite" edge or a "check in" edge in response to a user's action corresponding to a respective action. As another example and not by way of limitation, a user (user "C") may listen to a particular song ("Ramble On") using a particular application (SPOTIFY, which is an online music application). In this case, social-networking system 702 may create a "listened" edge 806 and a "used" edge (as illustrated in FIG. 8) between user nodes 802 corresponding to the user and concept nodes 804 corresponding to the song and application to indicate that the user listened to the song and used the application. Moreover, social-networking system 702 may create a "played" edge 806 (as illustrated in FIG. 8) between concept nodes 804 corresponding to the song and the application to indicate that the particular song was played by the particular application. In this case, "played" edge 806 corresponds to an action performed by an external application (SPOTIFY) on an external audio file (the song "Imagine"). Although this disclosure describes particular edges 806 with particular attributes connecting user nodes 802 and concept nodes 804, this disclosure contemplates any suitable edges 806 with any suitable attributes connecting user nodes 802 and concept nodes 804. Moreover, although this disclosure describes edges between a user node 802 and a concept node 804 representing a single relationship, this disclosure contemplates edges between a user node 802 and a concept node 804 representing one or more relationships. As an example and not by way of limitation, an edge 806 may represent both that a user likes and has used at a particular concept. Alternatively, another edge 806 may represent each type of relationship (or multiples of a single relationship) between a user node 802 and a concept node 804 (as illustrated in FIG. 8 between user node 802 for user "E" and concept node 804 for "SPOTIFY").

In particular embodiments, social-networking system 702 may create an edge 806 between a user node 802 and a concept node 804 in social graph 800. As an example and not by way of limitation, a user viewing a concept-profile page (such as, for example, by using a web browser or a special-purpose application hosted by the user's client system 706) may indicate that he or she likes the concept represented by the concept node 804 by clicking or selecting a "Like" icon, which may cause the user's client system 706 to send to social-networking system 702 a message indicating the user's liking of the concept associated with the concept-profile page. In response to the message, social-networking system 702 may create an edge 806 between user node 802 associated with the user and concept node 804, as illustrated by "like" edge 806 between the user and concept node 804. In particular embodiments, social-networking system 702 may store an edge 806 in one or more data stores. In particular embodiments, an edge 806 may be automatically formed by social-networking system 702 in response to a particular user action. As an example and not by way of limitation, if a first user uploads a picture, watches a movie, or listens to a song, an edge 806 may be formed between user node 802 corresponding to the first user and concept nodes 804 corresponding to those concepts. Although this disclosure describes forming particular edges 806 in particular manners, this disclosure contemplates forming any suitable edges 806 in any suitable manner.

In particular embodiments, an advertisement may be text (which may be HTML-linked), one or more images (which may be HTML-linked), one or more videos, audio, one or more ADOBE FLASH files, a suitable combination of these, or any other suitable advertisement in any suitable digital format presented on one or more webpages, in one or more e-mails, or in connection with search results requested by a user. In addition or as an alternative, an advertisement may be one or more sponsored stories (e.g., a news-feed or ticker item on social-networking system 702). A sponsored story may be a social action by a user (such as "liking" a page, "liking" or commenting on a post on a page, RSVPing to an event associated with a page, voting on a question posted on a page, checking in to a place, using an application or playing a game, or "liking" or sharing a website) that an advertiser promotes, for example, by having the social action presented within a pre-determined area of a profile page of a user or other page, presented with additional information associated with the advertiser, bumped up or otherwise highlighted within news feeds or tickers of other users, or otherwise promoted. The advertiser may pay to have the social action promoted. As an example and not by way of limitation, advertisements may be included among the search results of a search-results page, where sponsored content is promoted over non-sponsored content.

In particular embodiments, an advertisement may be requested for display within social-networking-system webpages, third-party webpages, or other pages. An advertisement may be displayed in a dedicated portion of a page, such as in a banner area at the top of the page, in a column at the side of the page, in a GUI of the page, in a pop-up window, in a drop-down menu, in an input field of the page, over the top of content of the page, or elsewhere with respect to the page. In addition or as an alternative, an advertisement may be displayed within an application. An advertisement may be displayed within dedicated pages, requiring the user to interact with or watch the advertisement before the user may access a page or utilize an application. The user may, for example view the advertisement through a web browser.

A user may interact with an advertisement in any suitable manner. The user may click or otherwise select the advertisement. By selecting the advertisement, the user may be directed to (or a browser or other application being used by the user) a page associated with the advertisement. At the page associated with the advertisement, the user may take additional actions, such as purchasing a product or service associated with the advertisement, receiving information associated with the advertisement, or subscribing to a newsletter associated with the advertisement. An advertisement with audio or video may be played by selecting a component of the advertisement (like a "play button"). Alternatively, by selecting the advertisement, social-networking system 702 may execute or modify a particular action of the user.

An advertisement may also include social-networking-system functionality that a user may interact with. As an example and not by way of limitation, an advertisement may enable a user to "like" or otherwise endorse the advertisement by selecting an icon or link associated with endorsement. As another example and not by way of limitation, an advertisement may enable a user to search (e.g., by executing a query) for content related to the advertiser. Similarly, a user may share the advertisement with another user (e.g., through social-networking system 702) or RSVP (e.g., through social-networking system 702) to an event associated with the advertisement. In addition or as an alternative, an advertisement may include social-networking-system context directed to the user. As an example and not by way of limitation, an advertisement may display information about a friend of the user within social-networking system 702 who has taken an action associated with the subject matter of the advertisement.

In particular embodiments, social-networking system 702 may determine the social-graph affinity (which may be referred to herein as "affinity") of various social-graph entities for each other. Affinity may represent the strength of a relationship or level of interest between particular objects associated with the online social network, such as users, concepts, content, actions, advertisements, other objects associated with the online social network, or any suitable combination thereof. Affinity may also be determined with respect to objects associated with third-party systems 708 or other suitable systems. An overall affinity for a social-graph entity for each user, subject matter, or type of content may be established. The overall affinity may change based on continued monitoring of the actions or relationships associated with the social-graph entity. Although this disclosure describes determining particular affinities in a particular manner, this disclosure contemplates determining any suitable affinities in any suitable manner.

In particular embodiments, social-networking system 702 may measure or quantify social-graph affinity using an affinity coefficient (which may be referred to herein as "coefficient"). The coefficient may represent or quantify the strength of a relationship between particular objects associated with the online social network. The coefficient may also represent a probability or function that measures a predicted probability that a user will perform a particular action based on the user's interest in the action. In this way, a user's future actions may be predicted based on the user's prior actions, where the coefficient may be calculated at least in part a the history of the user's actions. Coefficients may be used to predict any number of actions, which may be within or outside of the online social network. As an example and not by way of limitation, these actions may include various types of communications, such as sending messages, posting content, or commenting on content; various types of a observation actions, such as accessing or viewing profile pages, media, or other suitable content; various types of coincidence information about two or more social-graph entities, such as being in the same group, tagged in the same photograph, checked-in at the same location, or attending the same event; or other suitable actions. Although this disclosure describes measuring affinity in a particular manner, this disclosure contemplates measuring affinity in any suitable manner.

In particular embodiments, social-networking system 702 may use a variety of factors to calculate a coefficient. These factors may include, for example, user actions, types of relationships between objects, location information, other suitable factors, or any combination thereof. In particular embodiments, different factors may be weighted differently when calculating the coefficient. The weights for each factor may be static or the weights may change according to, for example, the user, the type of relationship, the type of action, the user's location, and so forth. Ratings for the factors may be combined according to their weights to determine an overall coefficient for the user. As an example and not by way of limitation, particular user actions may be assigned both a rating and a weight while a relationship associated with the particular user action is assigned a rating and a correlating weight (e.g., so the weights total 100%). To calculate the coefficient of a user towards a particular object, the rating assigned to the user's actions may comprise, for example, 60% of the overall coefficient, while the relationship between the user and the object may comprise 40% of the overall coefficient. In particular embodiments, the social-networking system 702 may consider a variety of variables when determining weights for various factors used to calculate a coefficient, such as, for example, the time since information was accessed, decay factors, frequency of access, relationship to information or relationship to the object about which information was accessed, relationship to social-graph entities connected to the object, short- or long-term averages of user actions, user feedback, other suitable variables, or any combination thereof. As an example and not by way of limitation, a coefficient may include a decay factor that causes the strength of the signal provided by particular actions to decay with time, such that more recent actions are more relevant when calculating the coefficient. The ratings and weights may be continuously updated based on continued tracking of the actions upon which the coefficient is based. Any type of process or algorithm may be employed for assigning, combining, averaging, and so forth the ratings for each factor and the weights assigned to the factors. In particular embodiments, social-networking system 702 may determine coefficients using machine-learning algorithms trained on historical actions and past user responses, or data farmed from users by exposing them to various options and measuring responses. Although this disclosure describes calculating coefficients in a particular manner, this disclosure contemplates calculating coefficients in any suitable manner.

In particular embodiments, social-networking system 702 may calculate a coefficient based on a user's actions. Social-networking system 702 may monitor such actions on the online social network, on a third-party system 708, on other suitable systems, or any combination thereof. Any suitable type of user actions may be tracked or monitored. Typical user actions include viewing profile pages, creating or posting content, interacting with content, joining groups, listing and confirming attendance at events, checking-in at locations, liking particular pages, creating pages, and performing other tasks that facilitate social action. In particular embodiments, social-networking system 702 may calculate a coefficient based on the user's actions with particular types of content. The content may be associated with the online social network, a third-party system 708, or another suitable system. The content may include users, profile pages, posts, news stories, headlines, instant messages, chat room conversations, emails, advertisements, pictures, video, music, other suitable objects, or any combination thereof. Social-networking system 702 may analyze a user's actions to determine whether one or more of the actions indicate an affinity for subject matter, content, other users, and so forth. As an example and not by way of limitation, if a user may make frequently posts content related to "coffee" or variants thereof, social-networking system 702 may determine the user has a high coefficient with respect to the concept "coffee". Particular actions or types of actions may be assigned a higher weight and/or rating than other actions, which may affect the overall calculated coefficient. As an example and not by way of limitation, if a first user emails a second user, the weight or the rating for the action may be higher than if the first user simply views the user-profile page for the second user.

In particular embodiments, social-networking system 702 may calculate a coefficient based on the type of relationship between particular objects. Referencing the social graph 800, social-networking system 702 may analyze the number and/or type of edges 806 connecting particular user nodes 802 and concept nodes 804 when calculating a coefficient. As an example and not by way of limitation, user nodes 802 that are connected by a spouse-type edge (representing that the two users are married) may be assigned a higher coefficient than user nodes 802 that are connected by a friend-type edge. In other words, depending upon the weights assigned to the actions and relationships for the particular user, the overall affinity may be determined to be higher for content about the user's spouse than for content about the user's friend. In particular embodiments, the relationships a user has with another object may affect the weights and/or the ratings of the user's actions with respect to calculating the coefficient for that object. As an example and not by way of limitation, if a user is tagged in first photo, but merely likes a second photo, social-networking system 702 may determine that the user has a higher coefficient with respect to the first photo than the second photo because having a tagged-in-type relationship with content may be assigned a higher weight and/or rating than having a like-type relationship with content. In particular embodiments, social-networking system 702 may calculate a coefficient for a first user based on the relationship one or more second users have with a particular object. In other words, the connections and coefficients other users have with an object may affect the first user's coefficient for the object. As an example and not by way of limitation, if a first user is connected to or has a high coefficient for one or more second users, and those second users are connected to or have a high coefficient for a particular object, social-networking system 702 may determine that the first user should also have a relatively high coefficient for the particular object. In particular embodiments, the coefficient may be based on the degree of separation between particular objects. Degree of separation between any two nodes is defined as the minimum number of hops required to traverse the social graph from one node to the other. A degree of separation between two nodes can be considered a measure of relatedness between the users or the concepts represented by the two nodes in the social graph. For example, two users having user nodes that are directly connected by an edge (i.e., are first-degree nodes) may be described as "connected users" or "friends." Similarly, two users having user nodes that are connected only through another user node (i.e., are second-degree nodes) may be described as "friends of friends." The lower coefficient may represent the decreasing likelihood that the first user will share an interest in content objects of the user that is indirectly connected to the first user in the social graph 800. As an example and not by way of limitation, social-graph entities that are closer in the social graph 800 (i.e., fewer degrees of separation) may have a higher coefficient than entities that are further apart in the social graph 800.

In particular embodiments, social-networking system 702 may calculate a coefficient based on location information. Objects that are geographically closer to each other may be considered to be more related, or of more interest, to each other than more distant objects. In particular embodiments, the coefficient of a user towards a particular object may be based on the proximity of the object's location to a current location associated with the user (or the location of a client system 706 of the user). A first user may be more interested in other users or concepts that are closer to the first user. As an example and not by way of limitation, if a user is one mile from an airport and two miles from a gas station, social-networking system 702 may determine that the user has a higher coefficient for the airport than the gas station based on the proximity of the airport to the user.

In particular embodiments, social-networking system 702 may perform particular actions with respect to a user based on coefficient information. Coefficients may be used to predict whether a user will perform a particular action based on the user's interest in the action. A coefficient may be used when generating or presenting any type of objects to a user, such as advertisements, search results, news stories, media, messages, notifications, or other suitable objects. The coefficient may also be utilized to rank and order such objects, as appropriate. In this way, social-networking system 702 may provide information that is relevant to user's interests and current circumstances, increasing the likelihood that they will find such information of interest. In particular embodiments, social-networking system 702 may generate content based on coefficient information. Content objects may be provided or selected based on coefficients specific to a user. As an example and not by way of limitation, the coefficient may be used to generate media for the user, where the user may be presented with media for which the user has a high overall coefficient with respect to the media object. As another example and not by way of limitation, the coefficient may be used to generate advertisements for the user, where the user may be presented with advertisements for which the user has a high overall coefficient with respect to the advertised object. In particular embodiments, social-networking system 702 may generate search results based on coefficient information. Search results for a particular user may be scored or ranked based on the coefficient associated with the search results with respect to the querying user. As an example and not by way of limitation, search results corresponding to objects with higher coefficients may be ranked higher on a search-results page than results corresponding to objects having lower coefficients.

In particular embodiments, social-networking system 702 may calculate a coefficient in response to a request for a coefficient from a particular system or process. To predict the likely actions a user may take (or may be the subject of) in a given situation, any process may request a calculated coefficient for a user. The request may also include a set of weights to use for various factors used to calculate the coefficient. This request may come from a process running on the online social network, from a third-party system 708 (e.g., via an API or other communication channel), or from another suitable system. In response to the request, social-networking system 702 may calculate the coefficient (or access the coefficient information if it has previously been calculated and stored). In particular embodiments, social-networking system 702 may measure an affinity with respect to a particular process. Different processes (both internal and external to the online social network) may request a coefficient for a particular object or set of objects. Social-networking system 702 may provide a measure of affinity that is relevant to the particular process that requested the measure of affinity. In this way, each process receives a measure of affinity that is tailored for the different context in which the process will use the measure of affinity.

In connection with social-graph affinity and affinity coefficients, particular embodiments may utilize one or more systems, components, elements, functions, methods, operations, or steps disclosed in U.S. Patent Application No. 11/503093, filed 11 August 2006, U.S. Patent Application No. 12/977027, filed 22 December 2010, U.S. Patent Application No. 12/978265, filed 23 December 2010, and U.S. Patent Application No. 13/642869, field 01 October 2012, each of which is incorporated by reference.

In particular embodiments, one or more of the content objects of the online social network may be associated with a privacy setting. The privacy settings (or "access settings") for an object may be stored in any suitable manner, such as, for example, in association with the object, in an index on an authorization server, in another suitable manner, or any combination thereof. A privacy setting of an object may specify how the object (or particular information associated with an object) can be accessed (e.g., viewed or shared) using the online social network. Where the privacy settings for an object allow a particular user to access that object, the object may be described as being "visible" with respect to that user. As an example and not by way of limitation, a user of the online social network may specify privacy settings for a user-profile page identify a set of users that may access the work experience information on the user-profile page, thus excluding other users from accessing the information. In particular embodiments, the privacy settings may specify a "blocked list" of users that should not be allowed to access certain information associated with the object. In other words, the blocked list may specify one or more users or entities for which an object is not visible. As an example and not by way of limitation, a user may specify a set of users that may not access photos albums associated with the user, thus excluding those users from accessing the photo albums (while also possibly allowing certain users not within the set of users to access the photo albums). In particular embodiments, privacy settings may be associated with particular social-graph elements. Privacy settings of a social-graph element, such as a node or an edge, may specify how the social-graph element, information associated with the social-graph element, or content objects associated with the social-graph element can be accessed using the online social network. As an example and not by way of limitation, a particular concept node 804 corresponding to a particular photo may have a privacy setting specifying that the photo may only be accessed by users tagged in the photo and their friends. In particular embodiments, privacy settings may allow users to opt in or opt out of having their actions logged by social-networking system 702 or shared with other systems (e.g., third-party system 708). In particular embodiments, the privacy settings associated with an object may specify any suitable granularity of permitted access or denial of access. As an example and not by way of limitation, access or denial of access may be specified for particular users (e.g., only me, my roommates, and my boss), users within a particular degrees-of-separation (e.g., friends, or friends-of-friends), user groups (e.g., the gaming club, my family), user networks (e.g., employees of particular employers, students or alumni of particular university), all users ("public"), no users ("private"), users of third-party systems 708, particular applications (e.g., third-party applications, external websites), other suitable users or entities, or any combination thereof. Although this disclosure describes using particular privacy settings in a particular manner, this disclosure contemplates using any suitable privacy settings in any suitable manner.

In particular embodiments, one or more servers may be authorization/privacy servers for enforcing privacy settings. In response to a request from a user (or other entity) for a particular object stored in a data store, social-networking system 702 may send a request to the data store for the object. The request may identify the user associated with the request and may only be sent to the user (or a client system 706 of the user) if the authorization server determines that the user is authorized to access the object based on the privacy settings associated with the object. If the requesting user is not authorized to access the object, the authorization server may prevent the requested object from being retrieved from the data store, or may prevent the requested object from be sent to the user. In the search query context, an object may only be generated as a search result if the querying user is authorized to access the object. In other words, the object must have a visibility that is visible to the querying user. If the object has a visibility that is not visible to the user, the object may be excluded from the search results. Although this disclosure describes enforcing privacy settings in a particular manner, this disclosure contemplates enforcing privacy settings in any suitable manner.

The foregoing specification is described with reference to specific exemplary embodiments thereof. Various embodiments and aspects of the disclosure are described with reference to details discussed herein, and the accompanying drawings illustrate the various embodiments. The description above and drawings are illustrative and are not to be construed as limiting. Numerous specific details are described to provide a thorough understanding of various embodiments.

The additional or alternative embodiments may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
receiving, by one or more servers and from a user client-device associated with a user, a request to initiate a payment transaction between the user and a merchant;
identifying, by the one or more servers, a payment authorization number associated with a user account for the user;
obtaining, by the one or more servers, a payment token representing the payment authorization number corresponding to the payment transaction;
encrypting, by the one or more servers, the payment token representing the payment authorization number; and
sending, by the one or more servers to the user client-device, the encrypted payment token for the user client-device to provide to a merchant system associated with the merchant in connection with the payment transaction.

2. The method as recited in claim 1, wherein receiving the request to initiate the payment transaction between the user and the merchant comprises receiving, from the user client-device, a JavaScript request via an application interface associated with the merchant.

3. The method as recited in claim 2, further comprising:
identifying user information associated with the payment authorization number; and
sending, to the user client-device, the user information with the encrypted payment token.

4. The method as recited in claim 3, further comprising:
generating a payment message comprising the encrypted payment token and the user information; and
sending the payment message for autocompleting a payment form associated with the merchant.

5. The method as recited in any of claims 2 to 4, wherein encrypting the payment token comprises encrypting the payment token to initiate the payment transaction between the user and the merchant irrespective of an operating system of the user client-device.

6. The method as recited in any of claims 1 to 5, wherein encrypting the payment token comprises encrypting the payment token with a key associated with the user client-device for decrypting the payment token at the user client-device.

7. The method as recited in any of claims 1 to 6, further comprising signing the payment token with a private key associated with the one or more servers for the user client-device.

8. The method as recited in any of claims 1 to 7, wherein obtaining the payment token representing the payment authorization number comprises:
identifying the payment authorization number in connection with a payment credential of the user;
sending, to a card network system associated with the payment credential of the user, a request message for the payment token representing the payment authorization number; and
receiving, from the card network system, the payment token representing the payment authorization number.

9. The method as recited in any of claims 1 to 8, wherein encrypting the payment token comprises encrypting the payment token according to a format of the payment authorization number.

10. The method as recited in any of claims 1 to 9, wherein identifying the payment authorization number associated with the user account for the user comprises receiving an obfuscated user identifier from the user client-device and using the obfuscated user identifier to retrieve the payment authorization number.

11. The method as recited in any of claims 1 to 10, wherein the user account is a social networking account.

12. A system comprising:
at least one processor; and
a non-transitory computer readable storage medium comprising instructions that, when executed by the at least one processor, cause the system to perform a method according to any of claims 1 to 11.

13. A non-transitory computer readable storage medium comprising instructions that, when executed by at least one processor, cause a computer system to perform a method according to any of claims 1 to 11.

14. A computer program product, preferably comprising a computer-readable non-transitory storage media, that is operable when executed on a data processing system to perform a method according to any of claims 1 to 11.
